(19) Europäisches Patentamt
European Patent Office
Office européen des brevets

(11) **EP 4 334 840 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **22734472.8**

(22) Anmeldetag: **04.05.2022**

(51) Internationale Patentklassifikation (IPC):
***G06K 19/06*** *(2006.01)*

(52) Gemeinsame Patentklassifikation (CPC):
**G06K 19/06037; G06K 19/0614**

(86) Internationale Anmeldenummer:
**PCT/EP2022/025206**

(87) Internationale Veröffentlichungsnummer:
**WO 2022/233458 (10.11.2022 Gazette 2022/45)**

(54) **3D-CODE**

3D CODE

CODE 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2021 DE 202021001643 U**

(43) Veröffentlichungstag der Anmeldung:
**13.03.2024 Patentblatt 2024/11**

(73) Patentinhaber: **Khadjavi, Armin**
**82065 Baierbrunn (DE)**

(72) Erfinder: **Khadjavi, Armin**
**82065 Baierbrunn (DE)**

(56) Entgegenhaltungen:
**WO-A1-01/24106      WO-A1-2019/214291
WO-A1-2021/001767**

**Beschreibung**

Es handelt sich um einen 3D-Code, welcher eine hohe Informationsidentität aufweist, wobei die Informationsidentität eine Farbcodierung und / oder eine Überlagerung von 1D-Bar-Codes und / oder 2D-Codes (2D-Matrix-Codes) aufweist.

Dabei ist eine hohe Informationsdichte auf einem kleinen Code-Träger bereitzustellen, die fälschungssicher ist und verschlüsselt werden kann.

Die Aufgabe wird durch einen 3D-Code, welcher eine dreidimensionale Kodierung ist, gelöst. Der 3D-Code weist mindestens zwei 2D R-Codes auf.

1D bedeutet eindimensional wie ein Bar-Code.

2D bedeutet zweidimensional wie ein QR-Code bzw. 2D-Matrix-Code.

3D bedeutet dreidimensional.

Es wird hier ganz bewusst die Bezeichnung Bar-Code vermieden, denn das englische Wort "Bar" auf Deutsch "Balken" bedeutet und wird als eine Begrifflichkeit für eine lineare, bzw. eindimensionale Kodierung benutzt.

Ein QR-Code umfasst in der Regel eine Vielzahl von Feldern, die für gewöhnlich schwarze und weiße oder farbige Felder sind.

QR-Codes sind zweidimensionale n x m Matrix-Codes. Für die Matrix ist "n" die Anzahl der Zeilen Zeilenanzahl) und "m" die Anzahl der Spalten Spaltenanzahl).

Für die n x m Matrix ist $n \geq 1$ und $m \geq 2$.

Ein n x m Matrix-Code mit $n = 1$ und $m \geq 2$, ist ein Bar-Code.

Ein n x m Matrix-Code mit $n \geq 2$ und $m \geq 2$, ist ein QR-Code.

Die QR-Codes für die Anwendung für den 3D-Code müssen farbige Felder aufweisen.

Der 3D-Code kann als Label oder Etikett gegen Warenpiraterie und für fälschungssichere Ausweise verwendet werden.

Die Vorteile des 3D-Code gegenüber QR-Code sind:

Der 3D-Code kann codiert werden,
der 3D-Code benötigt nur wenig Platz,
der 3D-Code hat viel mehr Variationskapazität als ein QR-Code.

Die 3D-Code hat weiterhin den Vorteil, dass in einem kleinen Raum eine große Informationsdichte erzielt werden kann.

Beispiel 1: Für einen Code mit nur 3 Feldern und mit 2 unterschiedlichen Farben als Auswahl (ähnlich zum Binärcode 0 und 1) sind folgende Variationen möglich:

| Bar-Code (3) mit 3 Strichen Feldern) | $\approx$ | 10 | Linearbeispiel |
| QR-Code (9) mit 9 Feldern | $\approx$ | 500 | Flächenbeispiel |
| 3D-Code (27) mit 27 Feldern | $\approx$ | 130 000 000 | Raumbeispiel |

Das Raumbeispiel nimmt 9-fach mehr Raum in Anspruch als das Linearbeispiel und bietet 13 000 000 -Fach mehr Kombinationsmöglichkeiten an.

Das Raumbeispiel nimmt 3-fach mehr Raum in Anspruch als das Flächenbeispiel und bietet 260000-Fach mehr Kombinationsmöglichkeiten an.

Dabei sind die Möglichkeiten der unterschiedlichen Farben noch nicht berücksichtigt.

Wenn die Farben auch wie im Beispiel 2 berücksichtigt werden kann allein mit einer 3D-Code 7600 Milliarden Kombinationsmöglichkeiten erzeugt werden.

Beispiel 2: für einen 3D-Code mit 27 Feldern und mit 3 Informationsvariationen 0 / 1 / F diese können beispielsweise Blank, Farbe 1 und Farbe 2 sein: 7 600 000 000 000

Die 9 Feldern im Beispiel 1 sind zu verstehen als ein QR-Code, der 3x3 = 9 Felder hat.

Die 27 Feldern in den Beispielen 1 und 2 sind zu verstehen als 3 QR-Codes, die jeweils 3x3 = 9 Felder haben und auf 3 Schichten aufeinander liegen.

Die 2D-Codes bzw. QR-Codes können nach ISO/IEC 18004:2015 definiert sein.

Ein 2D-Code gemäß dem Stand der Technik umfasst auf einer XY Ebene eine Vielzahl von nebeneinander angeordneten Feldern, die jeweils Erkennungszeichen aufweisen können oder keine Erkennungszeichen haben. Die Erkennungszeichen eines 2D-Codes können farbig oder grau sein. Auch das Fehlen des Erkennungszeichens in dem jeweiligen Feld ist eine Information, die für die Erfassung des 2D-Codes herangezogen wird.

Manche Felder sind mit Erkennungszeichen belegt und ansonsten sind sie frei von Erkennungszeichen. Ein Feld frei von Erkennungszeichen kann ein blankes Feld sein.

Die Anwendung von unterschiedlichen Farben als Erkennungszeichen für einen 2D-Code erhöht die Informationsdichte des 2D-Codes.

Ein weiterer Aspekt ist die Fälschungssicherheit.

KR20180129174A beschreibt einen für die Fälschungssicherheit relevanten 3D-Code, der in einer Schicht dreidimensionale Körper aufweist, die jedoch keinen Beitrag zur Erhöhung der Informationsdichte leisten. Der Herstellungsprozess ist zudem aufwendig.

WO2019 214291A1 beschreibt einen 3D-Code, der mehrere überlappende farbige QR-Codes aufweist. Die Farbe auf jedem QR-Code ist einmalig und variiert sich auf diesem QR-Code nicht. D.h., jeder QR-Code hat jeweils eine einzige Farbe so dass verschiedene Farben auf einem QR-Code nicht möglich sind. Somit wird die Möglichkeit für die Informationsdichte nicht ausgeschöpft.

WO 0124106A1 beschreibt einen Code, der aus N Bar-Codes oder N QR-Codes besteht, die jeweils eine einzige Farbe haben. Dies ist aus WO2019 214291A1, wie oben beschrieben, bekannt. Somit wird die Möglichkeit für die Informationsdichte nicht ausgeschöpft. WO2021001767A1 beschreibt einen Multiplex-Lumineszenz-QR-Code, der durch Überlappung verschiedener Schichten gebildet wird, die jeweils aus einem einzelnen QR-Code mit unterschiedlichen Formen bestehen und aus einem anderen Material hergestellt werden, damit das Material mit einem geeigneten Lesemittel erfasst werden kann. Die verschiedenen Schichten können genauso nebeneinander angeordnet werden, denn das Aufeinanderliegen keinen Einfluss auf die Funktionalität hat. Die Produktion ist aufwendig und im Scanner müssen verschiedene Lesemittel bereitgestellt werden.

Die Aufgabe der vorliegenden Erfindung ist, ein fälschungssicherer Code mit einer hohen Informationsdichte bereit zu stellen, der einfach herstellbar ist.

Die Erfindungsgemäße Lösung der Aufgabe für die weitere und einfache Erhöhung der Informationsdichte mit Sicherheit gegen Fälschung ist die Bereitstellung eines für den sichtbaren Wellenlängenbereich geeigneten 3D-Codes. Ein 3D-Code umfasst mindestens zwei QR-Codes mit lichtdurchlässigen, transparenten, farbigen Feldern.

Hierzu wird eine Vielzahl von QR-Codes aufeinander gestapelt, um so mehr Information zur Verfügung zu stellen.

Der 3D-Code hat einen Träger und mindestens einen ersten und einen zweiten QR-Codes. Die QR-Codes sind zweidimensionale n x m Matrix-Codes. Für die Matrix ist "n" die Anzahl der Zeilen Zeilenanzahl und "m" die Anzahl der Spalten Spaltenanzahl.

Der Träger ist im Wesentlichen ein flächiger Träger. D.h., der Träger ist flach.

Flach bedeutet, dass die Dicke des Trägers verglichen zu dem Umfang des Trägers klein z.B. 1/10 ist. Der flächige Träger hat eine Fläche, die eine Bezugsfläche ist. Die Fläche des Trägers ist in einem kartesischen Koordinatensystem parallel zu der Ebene XY orientiert. Der erste QR-Code weist n x m Felder auf.

Der zweite QR-Code 2 weist n x m Felder auf.

Der zweite QR-Code ist unmittelbar auf dem Träger aufgebracht.

Der erste QR-Code ist dann auf den zweiten QR-Code aufgebracht.

Die Felder des ersten QR-Codes überdecken die Felder des zweiten QR-Codes. Somit bilden die Felder des ersten QR-Codes zusammen mit den korrespondierenden Feldern des zweiten QR-Codes in der Richtung +Z des kartesischen Koordinatensystems Stapeln.

Die Felder des ersten QR-Codes und die Felder des zweiten QR-Codes sind farbige, transparente Felder. Für die Auswahl der Farben für die farbigen Felder müssen mindestens zwei unterschiedliche Farben zur Auswahl stehen (ähnlich zum Binärcode 0 und 1).

Der Träger ist ein transparentes Substrat. Da die Felder der mindestens zwei QR-Codes auch transparent sind, kann ein Lichtstrahl, der auf den ersten QR-Code gerichtet ist, durch den zweiten QR-Code und den Träger passieren. Ein 3D-Code mit einem transparenten Träger ist ein transmissiver 3D-Code. Das Substrat kann farblos oder farbig sein.

Das Substrat kann eine Kunststofffolie oder ein transparentes Papier sein.

Der Lichtstrahl soll in Richtung +Z, im Wesentlichen senkrecht zu dem ersten QR-Code gerichtet sein, damit Abweichungsfehler vermieden werden können. Eine Abweichung von dem senkrechten Lichtstrahl eine Stärkere Dicke der farbigen Felder vortäuschen. Eine Abweichung von 5° ist tolerierbar.

Das Substrat kann eine Dicke von 0,01 bis 1,0 mm und bevorzugt 0,1 bis 0,3 mm haben. Anstatt eines Substrates kann der Träger des 3D-Codes ein Reflektor mit einer reflektierenden Fläche sein. Die reflektierende Fläche kann ein Farbauftrag, eine metallische Folie oder ein Spiegel sein. Der Reflektor kann auch ein weißes Papier sein.

Die reflektierende Fläche des Reflektors ist den QR-Codes zugewandt.

Da die Felder der mindestens zwei QR-Codes transparent sind, kann somit ein Lichtstrahl, der auf den ersten QR-Code gerichtet ist, durch ersten und dann durch den zweiten QR-Code passieren. Jedoch reflektiert dieser Lichtstrahl am Reflektor zurück und passiert zuerst den zweiten QR-Code und dann den ersten QR-Code. Der 3D-Code ist ein reflektiver 3D-Code.

Eine Vielzahl von QR-Codes können in einem kartesischen Koordinatensystem XYZ aufeinander gestapelt werden.

Die QR-Codes sind jeweils auf Ebenen parallel zu der XY Ebene orientiert und überdecken sich, so dass die Felder aller QR-Codes sich beim Stapeln in Z Richtung überdecken.

Eine Überdeckung der Felder der QR-Codes ist nicht unbedingt notwendig, jedoch eine Überdeckung der QR-Codes macht die Erfassung der Felder zur Bestimmung von Stapeln z.B. die Zuordnung der Felder eines ersten QR-Codes zu den Feldern eines zweiten QR-Codes leichter. Ein Überdeckungsfehler von etwa 10% bezogen auf die Kantenlänge des Erkennungszeichens ist hinnehmbar, weil der überlappende Kern immer noch gute gescannt werden kann. Alle so aufeinander gestapelten QR-Codes sind optisch zu erfassen. Die optisch erfassten Informationen werden in einer Datenbank hinterlegt. Es müssen mindestens zwei unterschiedliche Farben, Farbe1 und Farbe 2 (ähnlich zum Binärcode 0 und 1) für die Bestimmung der Farben der Felder der QR-Codes zur Auswahl stehen.

Beispiel 3: Hier werden die Farben der Felder von mindestens zwei aufeinander liegenden QR-Codes in einem beliebigen Stapel betrachtet.

Das Feld im ersten QR-Code hier als F1 bezeichnet und das korrespondiere Feld im zweiten QR-Code als F2 bezeichnet. F1 und F2 können mit Farbe1 oder Farbe2 belegt sein:

| F1 | F2 |
|----|----|
| Farbe1 | Farbe1 |
| Farbe1 | Farbe2 |
| Farbe2 | Farbe1 |
| Farbe2 | Farbe2 |

Es ist wesentlich, schon vor der Herstellung des 3D-Codes die Farbkombinationen der aufeinander liegenden Felder in einer Datenbank zu hinterlegen, weil im Herstellverfahren diese Werte zu Grunde liegen werden.

Es muss auch allein durchs Scannen feststellbar sein welche Farbe sich auf welchem QR-Code befindet; auf dem ersten QR-Code oder auf dem zweiten QR-Code.

Wenn es sich in einem Fall um Farbe1 für F1 und Farbe1 für F2 handelt, dann ist es auf Grund von optischen Messungen möglich eindeutig festzustellen, dass es sich um Farbe1+ Farbe1 handelt. D.h., sowohl F1 als auch F2 enthalten die Farbe1.

Beim Einstrahlen eines Lichtes mit der Anfangsintensität $I_0$ nur durch F1 oder F2 mit Farbe1 hindurch wird weniger Licht absorbiert als wenn das Licht durch F1+F2 mit jeweils der Farbe1 d.h., zweifache Farbel passieren würde.

Wie bereits für die zweifache Belegung F1+F2 durch Farbe1 erklärt, kann auch eine zweifache Belegung der F1+F2 durch Farbe2 gemessen und festgehalten werden.

Es ist nun von Bedeutung die Belegung F1+F2 durch zwei verschiedene Farben, Farbe1 und Farbe2 zu belegen und zu betrachten.

Überraschender Weise wird es nun einen Unterschied geben, ob der Lichtstrahl $I_0$ durch Farbe1 + Farbe2 oder durch Farbe2 + Farbe1 hindurch geht. Der Lichtstrahlintensitätsverlust bei der Kombination Farbe1 + Farbe2 ist unterschiedlich zu Farbe2 + Farbe1. Auch die resultierenden Farbwerte für Farbe1 + Farbe2 und Farbe2 + Farbe1 sind unterschiedlich.

Diese Unterschiede sind besonders markanten, wenn die Farben hell sind. Beispielsweise kann die Farbe1 gelb und die Farbe2 grün sein.

Eine geeignete gelbe Farbe gemäß CIE-Normfarbtafel ist: C:0 M:3 Y:44 K:5

Eine geeignete grüne Farbe gemäß CIE-Normfarbtafel ist: C:23 M:0 Y:51 K:13

Im Beispiel 3 sind die Dicke der farblichen Felder und die Farbe oder Farben für alle Felder der QR-Codes gleich.

Beispiel 4: Um die Lage des ersten QR-Codes auf Grund der Farbe des Feldes F1 festlegen und wieder erkennen zu können, kann die Farbe1 spezifisch nur für die Felder des ersten QR-Codes gewählt und dem ersten QR-Code zugeordnet werden. Analog kann eine Farbe2 für das Feld F2 auf dem zweiten QR-Code gewählt werden. Eine Farbe-P als Platzhalter kann auf jedem QR-Code vorkommen.

| F1 | F2 |
|----|----|
| Farbe1 | Farbe2 |
| Farbe-P | Farbe2 |
| Farbe1 | Farbe-P |
| Farbe-P | Farbe-P |

Diese Farbkombinationen sind immer eindeutig und können optisch erfasst und in der Datenbank hinterlegt werden. Beispielsweise kann die Farbe1 gelb, die Farbe2 grün und die Farbe-P rot sein.

Eine geeignete rote Farbe gemäß CIE-Normfarbtafel ist: C:0 M:43 Y:39 K:2

Im Beispiel 4 ist die Dicke der farblichen Felder immer gleich. Jedoch die Farbe oder Farben sind für verschiedene QR-Codes unterschiedlich.

Beispiel 5: Um die Lage des ersten QR-Codes auf Grund der Farbe für F1 festlegen und wieder erkennen zu können, kann die Farbe1, Farbe2 zwar sowohl für F1 als auch für F2 verwendet werden. Jedoch ist die Dicke der farblichen Felder des ersten QR-Codes von der Dicke der farblichen Felder des zweiten QR-Codes unterscheidbar.

| F1 | F2 |
|---|---|
| Farbe2-D1 | Farbe2-D2 |
| Farbe1-D1 | Farbe2-D2 |
| Farbe2-D1 | Farbe1-D2 |
| Farbe1-D1 | Farbe1-D2 |

Wobei D1 und D2 jeweils Information über die unterschiedlichen Dicken der farblichen Felder geben.

Diese Farbkombinationen sind immer eindeutig und können optisch erfasst und in der Datenbank hinterlegt werden. D.h., die Farbe oder Farben sind auf allen Schichten gleich. Jedoch die Dicken der farblichen Felder sind für verschiedene Schichten unterschiedlich.

Im Beispiel 5 sind die Farbe oder Farben der farblichen Felder immer gleich. Jedoch die Dicken der farblichen Felder sind für verschiedene QR-Codes unterschiedlich.

Auch die Größe und die Form der farblichen Felder sind zu definieren.

Die Form ist in der Regel rechteckig bzw. quadratisch. Aber runde oder ovale Formen sind auch üblich. Die Größe der Fläche eines farblichen Feldes kann $0,01 \text{ mm}^2$ bis $100 \text{ mm}^2$ oder mehr sein.

Eine sinnvolle Kombination der Beispiele 3, 4 und 5 ist möglich.

Analog zu der Beschreibung des 3D-Codes mit zwei QR-Codes kann eine Vielzahl von QR-Codes für die Ausbildung eines 3D-Codes verwendet werden. Auch die Anzahl der Farben für die farbigen Felder können mehr als zwei sein, Farbe-P, Farbe1, Farbe2, Farbe3, Farbe1-D1, Farbe1-D2, Farbe2-D1, Farbe2-D2, Farbe3-D1, Farbe3-D2. Hier steht D1 und D2 für verschiedenen Dicken.

Die Farbenkombinationen wie oben für eine zweifache Farbauswahl beschrieben können auch für die mehrfache (mehr als zweifache) Farbauswahl erfasst und in der Datenbank gespeichert werden.

Die farbigen Felder müssen transparent sein, damit sie einen Lichtstrahl durchlassen können. Ein schwarzes Feld eines QR-Codes wäre nicht geeignet, weil der Lichtstrahl absorbiert wird. Lichtdurchlässige, graue oder noch besser farbige Felder sind geeignet.

Die Felder der QR-Codes müssen immer farbig sein, damit der Lichtstrahl einer Lichtquelle die Farbe erfassen kann. Die einzelnen Farben werden optisch erfasst und in der Datenbank hinterlegt. Auch die resultierende Farbe, die durch den Lichtstrahl, der unterschiedliche farbigen Felder passiert, wird mittels eines kommerziell erhältlichen CMOS-Sensors oder / und einer Spektralanalyse gemäß dem Stand der Technik optisch erfasst und in der Datenbank hinterlegt. Für die Farbmessungen und Definition der Farbwerte wird CIE-LAB verwendet. Die Farbwerte werden in CMYK-Farbmodell angegeben oder nach der Erfassung der Messdaten in CMYK umgewandelt.

Für die Messungen kann DIN 5033-4 als Grundlage dienen.

Für eine Scannung zum Zwecke der Messung eines Stapels sendet eine Lichtquelle einen Lichtstrahl in den Stapel. Der eingesendete Lichtstrahl hat eine ungeschwächte Anfangsintensität $I_0$, und eine Wellenlänge $\lambda_0$. Das Licht wird vom Scanner empfangen.

Die Schwächung des empfangenen Lichtes gibt Information über die Farbkombination oder / und die Dicke der Felder im Stapel. Weitere Informationen können aus der Farbe bzw. der Wellenlänge des empfangenen Lichtes entnommen werden, um eindeutige Eigenschaften des empfangenen Lichtes, d.h., einen unverwechselbaren "Fingerprint" festzustellen.

Das Licht hat eine empfangene, geschwächte Lichtintensität I und eine Wellenlänge $\lambda$. Die Exktinktion E ist messbar und kann auch theoretisch berechnet werden.

Erfassung der Extinktion:

https://www.faes.de/MKA/MKA_Photometrieeinfuehrung/mka_photometrieeinfuehrung.html 20.10.2021

Der Extinktionskoeffizient $\varepsilon$ ist ein Maß für die Schwächung, Extinktion E, von elektromagnetischen Wellen durch ein Medium, bezogen auf die Weglänge d, durch das Medium und auf die Stoffmengenkonzentration c, des Stoffs im Lösungsmittel Farbe, die aufgetragen wird.). Die Schwächung erfolgt durch Streuung und Absorption; wenn der Anteil der Streuung vernachlässigt werden kann, spricht man auch vom Absorptionskoeffizienten. Die Extinktion E oder optische Dichte ist die wahrnehmungsgerecht logarithmisch formulierte Opazität und damit ein Maß für die Abschwächung einer Strahlung z. B. Licht) nach Durchqueren eines Mediums. Sie ist abhängig von der Wellenlänge $\lambda$ der Strahlung.

$$I_0 = \text{ungeschwächte Anfangsintensität des Lichtes}$$

$$I = \text{durchgelassene Intensität des Lichtes}$$

$$T = \text{Transmission} = I_0/I$$

$$\varepsilon = \text{molare Exktinktionskoeffizient}$$

$$c = \text{Konzentration}$$

$$d = \text{Schichtdicke}$$

$$E = \text{Exktinktion} = -\log T = -\log I_0/I) = \varepsilon \cdot c \cdot d$$

Theoretisch kann für jeden Stapel eines 3D-Codes den Wert für die Exktinktion ermittelt werden und somit die Einzigartigkeit aller möglichen Zusammenstellungen von Stapeln ermittelt werden.

Alle Werte $I_0$, $\varepsilon$, c und d sind bekannt. Die durchgelassene Intensität des Lichtes I, kann aus diesen Werten berechnet werden.

$I_0$ ist durch die Auswahl des Lichtes bekannt.

$\varepsilon$ kann aus Messdaten bzw. aus der Literatur entnommen werden.

c kann bei der Auswahl der zu implementierenden Farbe ermittelt werden.

d ist die Dicke des Feldes, die gemessen werden kann.

Eine Datenbank aus allen Zusammenstellungen aller Stapel kann als Grundlage für eine optische Scannung eines 3D-Codes verwendet werden.

Daraus kann erkannt werden, welche Felder der QR-Codes auf welchem QR-Code welche Farbe aufweisen. Die jeweiligen Zugehörigkeiten der Farben zu dem jeweiligen QR-Code werden im Voraus erfasst und in der Datenbank hinterlegt.

Erfassung der Farbbeschaffenheit: Die Wellenlänge kann durch eine Spektralanalyse gemäß dem Stand der Technik festgestellt werden. Wenn das Licht durch ein farbiges Feld gestrahlt wird, kann das Licht teilweise durch das farbige Feld absorbiert werden. Um Meßfehler bei solchen Erfassungsverfahren zu vermeiden, kann die Erfassung der Farbbeschaffenheit in einem dunklen Kasten stattfinden. Analog kann der Scann-Vorgang auch in einem dunklen Kasten durchgeführt werde.

Das aufgezeichnete Spektrum ist spezifisch und wird als der Fingerprint des betroffenen farbigen Feldes bezeichnet.

Die Farbwerte der reflektierten Farbe können auch mittels einer optischen Messung durch einen CMOS-Sensor gemäß dem Stand der Technik erfasst werden.

CMOS = Complementary metal-oxide-semiconductor.

Nach dem nun alle Variationen bzw. Kombinationen der farbigen Felder zum Vergleich in der Datenbank bereitgestellt worden sind, kann die Herstellung des 3D-Codes mit Hilfe der Informationen in der Datenbank durchgeführt werden.

Die Datenbank enthält organisatorischen Informationen und Messdaten.

Organisatorische Informationen bezüglich des Aufbaus des 3D-Codes werden in der Datenbank hinterlegt.

Die organisatorischen Informationen betreffen:

die Seriennummer der 3D-Codes,
die Personalisierung der 3D-Codes; d.h., jeder 3D-Code in der aktuellen Serie einmalig ist, Informationen über die Person oder das Projekt und Produkt, wofür der 3D-Code geplant ist,
die Anzahl der QR-Codes, die Anzahl der Zeilen und Spalten der QR-Codes, die nach Bedarf festgelegt werden,
die Anzahl der Farben für die farbigen Felder der QR-Codes, die mindestens zwei sein müssen,
die Dicke der farblichen Felder, die für alle QR-Codes gleich oder unterschiedlich sein können,
die Form und die Größe der farblichen Felder,
ob der Träger ein Reflektor oder ein lichtdurchlässiges Substrat ist sowie gegebenenfalls die Dicke des Substrats,
die ungeschwächte Anfangsintensität des Lichtstrahls $I_0$,
die Farbe des ungeschwächte des Lichtstrahls,

die Variation der Anfangslichtintensität $I_0$ sowie die Variation der Farbe des von der Lichtquelle gesendeten Lichtstrahls.

Diese organisatorischen Informationen sind während des Herstellungsprozesses für den Aufbau des 3D-Codes maßgeblich.

Die Messdaten betreffen:

Optische Eigenschaften der einzelnen, festgelegten Farben für die farbigen Felder der QR-Codes,
diese sind die jeweiligen Wellenlängen erfasst durch Spektralanalyse) der festgelegten Farben oder / und Farbwerte erfasst durch CMOS-Sensor),
Intensität I des durch das farbige Feld durchgelassenen Lichtes in Abhängigkeit von der Anfangsintensität des Lichtstrahls $I_0$ oder / und der Farbe des Lichtes,
optische Eigenschaften aller möglichen in einem Stapel der QR-Codes vorkommenden Farbkombinationen für die festgelegten Farben für die farbigen Felder der QR-Codes,
diese sind die Wellenlänge der jeweiligen Farbkombination erfasst durch Spektralanalyse der festgelegten Farben oder / und Farbwerte der resultierenden Lichtfarbe der jeweiligen Farbkombination erfasst durch CMOS-Sensor),
Intensität I des durch die farbigen Felder durchgelassenen Lichtes in Abhängigkeit von der Anfangsintensität des Lichtstrahls $I_0$ oder / und der Farbe des Lichtes.

Die optischen Eigenschaften aller möglichen in einem Stapel der QR-Codes vorkommenden Farbkombinationen sind auch abhängig von der Anfangsintensität und der Farbe des Lichtstrahls $I_0$. Die Farbe des Lichtstrahls $I_0$ ist in der Regel weiß und die Anfangsintensität des Lichtstrahls kann konstant sein. Optional kann die Anfangsintensität oder / und die Farbe des Lichtstrahls $I_0$ bei der Messung der optischen Eigenschaften variabel sein.

Die so gemessenen optischen Eigenschaften werden in der Datenbank hinterlegt.

Bei einem späteren Scann-Vorgang der betroffenen 3D-Codes werden mit Hilfe der in der Datenbank hinterlegten Informationen dieselben Werte für die variablen Lichtfarbe und die variablen Anfangsintensität Lichtstrahls $I_0$ zur Auswertung der relevanten, optischen Eigenschaften des zu scannenden 3D-Codes herangenommen. Die Variation der Lichtwerte der Lichtquelle erhöht die Sicherheit für den 3D-Code, weil diese zwei Parameter quasi als Zufallsparameter einsetzbar sind. Die Lichtquelle kann ein Leuchtmittel z.B. eine Diode oder eine Halogenlampe mit einer vordefinierten Lichtbeschaffenheit sein. Das Licht des Leuchtmittels kann farblos oder farbig sein. Für die Realisierung der variablen Lichtintensität $I_0$ kann das Leuchtmittel gedimmt werden. Für die variable Lichtfarbe können Farbfilter oder unterschiedliche farbige Leuchtmittel eingesetzt werden.

Diese Messdaten bilden bei der Scannung des 3D-Codes eine wesentliche Grundlage zur Beurteilung der Authentizität des 3D-Codes.

Für den Zugang zu der Datenbank und für die Durchführung des Scann-Vorgangs dient ein Computerprogramm, das als eine 3D-Code-App im Scanner implementiert wird.

Der Scanner kann mit der 3D-Code-App ausgestattet werden.

Die 3D-Code-App kann auch für ein Smartphone als Scanner implementiert werden.

Für die Erstellung der Datenbank müssen Daten bezüglich der Beschaffenheit der Felder der QR-Codes erfasst bzw. festgelegt werden. Es wird die Anzahl der QR-Codes, die Anzahl der Zeilen und Spalten der QR-Codes sowie die geometrische Größe und Form der farbigen Felder der QR-Codes nach Bedarf festgelegt. Mindestens zwei oder mehr unterschiedliche Farben müssen zur Auswahl für farbige Felder festgelegt werden. Alle möglichen Variationen der Farben und deren Kombinationen in einem Stapel des 3D-Codes müssen im Vorfeld optisch erfasst werden. D.h., eine Lichtquelle sendet einen Lichtstrahl mit einer vordefinierten Anfangslichtintensität $I_0$ zu dem zu erfassenden Stapel des 3D-Codes.

Die Lichtquelle sendet einen Lichtstrahl mit einer vordefinierten Anfangslichtintensität zum 3D-Code. Der Lichtstrahl kann ein weißer oder ein farbiger Lichtstrahl sein. Die Variation der Anfangslichtintensität $I_0$ sowie der Farbe des von der Lichtquelle gesendeten Lichtstrahls, kann nach einem vorgeplanten Schema durchgeführt werden, welche in der Datenbank vordefiniert ist. Dies erhöht die Sicherheit des Scann-Systems, dass den 3D-Code, die Lichtquelle und den Scanner umfasst. Das Licht geht durch die Schichten des 3D-Codes und wird mittels des Reflektors zurück zum Scanner reflektiert.

Die Aufgabe ist nun alle so aufeinander gestapelten 2D-Codes optisch zu scannen und das Ergebnis elektronisch zu evaluieren, um dann den erwähnten 3D-Code zu evaluieren.

Für die oben genannten Herstellungsverfahren findet der Farbdruck mittels eines Digitaldruckers statt. Wobei der Digitaldrucker ein Tintenstrahldrucker oder ein Laserdrucker ist. Der Vorteil des Tintenstahldruckers ist, dass die Transparenz der Farben leichter erreicht werden kann. Der Vorteil des Laser-Druckers ist, dass auf der Kontaktfläche einer ersten Farbenschicht zu der Kontaktfläche einer zweiten Farbenschicht, die Farben entweder gar nicht oder nur geringfügig ineinander diffundieren.

Die Farbschicht kann eine Dicke von 0,001 bis 0,1 mm und bevorzugt 0,05 mm haben. Der Schichtdickenbereich

enthält 100 verschiedene Dicke zwischen 1 bis 100 $\mu$m mit jeweils einem Dickenzuwachs von 1 $\mu$m. Diese sind 1, 2, 3, 4, 5, 6 ... 94, 95, 96, 97, 98, 99, 100 $\mu$m.

Bevorzugter Weise werden für die Scannung der bereits erwähnten 3D-Codes der Wellenlängenbereich 400 nm bis 700 nm gewählt, welche für das Menschenauge ein sichtbares Spektrum ist und hat den Vorteil, dass es mit bloßem Auge gesichtet werden kann. Für die Scannung können alle Wellenlängen $\alpha$-, $\beta$- und $\gamma$-Strahl angewendet werden.

Bei der Anwendung von $\alpha$-Strahlung, $\beta$-Strahlung und $\gamma$-Strahlung, können Kunststoffe oder Metalle als Substrat verwendet werden. $\gamma$-Strahlung durchdringt Papier und Aluminium, so dass Aluminium-Folien als Substrat verwendet werden können. Als Erkennungszeichen der Felder auf verschiedenen Substraten können verschiedene Aluminium-Legierungen eingesetzt werden, die für die $\gamma$-Strahlung jeweils unterschiedliche Durchlässigkeit aufweisen. Ein Scanner hierzu sendet einen Angangs-$\gamma$-Strahl ein und empfängt einen geschwächten, reflektierten $\gamma$-Strahl zurück.

Der erfasste 3D-Code kann maschinellen abgelesen und elektronischen verarbeitet werden. Deswegen können 3D-Codes mit bekannten Methoden gemäß dem Stand der Technik kryptologische verschlüsselt werden.

Der 3D-Code kann für fälschungssicheren Ausweis, Personalausweis, Pass, Führerschein und Bankkarten eingesetzt werden.

Der 3D-Code kann gegen Markenpiraterie in Textilindustrie, Chipindustrie, Pharmaindustrie, Industriegüter und im Fahrzeugbau eingesetzt werden.

## Kurzbeschreibung der Abbildungen

Ausführungsbeispiele des 3D-Codes werden anhand der folgenden Zeichnungen beschrieben. Es zeigt:

Fig. 1a eine schematische Draufsicht einer 2D-Code gemäß dem Stand der Technik https://commons.wikimedia.org/w/index.php?curid= 1812723, 2021-04-29,
Fig. 1b Detailvergrößerung einer schematischen Draufsicht einer 2D-Code,
Fig. 2a eine perspektivische, schematische Darstellung zweier lichtdurchlässigen QR-Codes auf einem Träger,
Fig. 2b eine schematische Seitenansicht zweier lichtdurchlässigen QR-Codes auf einem Träger,
Fig. 3a eine schematische Seitenansicht eines lichtdurchlässigen 3D-Codes,
Fig. 3b eine schematische Seitenansicht eines lichtreflektierenden 3D-Codes.

## Detaillierte Beschreibung der Ausführungsformen

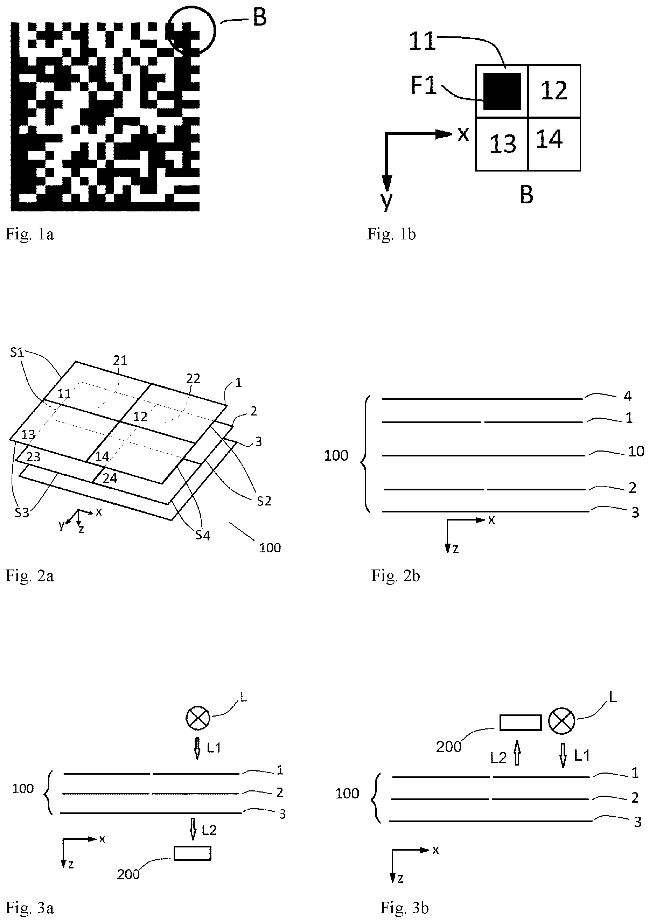

Fig. 1a zeigt eine schematische Draufsicht eines 2D-Codes gemäß dem Stand der Technik https://commons.wikimedia.org/w/index.php?curid= 1812723, 2021-04-29 Fig. 1b zeigt eine Detailvergrößerung B der schematischen Draufsicht des 2D-Codes.

Felder 11, 12, 13 und 14 des 2D-Codes befinden sich auf einer XY Ebene. Eine farbige Erkennungszeichen F1 ist auf dem Feld 11 aufgebracht. Bei einer optischen Scannung der Felder 11, 12, 13 und 14 wird von dem Scanner erkannt, dass das Feld 11 eine farbige Erkennungszeichen F1 aufweist und die anderen Felder keine Erkennungszeichen haben. Auch das Fehlen des Erkennungszeichens in dem jeweiligen Feld ist eine Information, die für die Erfassung des 2D-Codes herangezogen wird.

Das Erkennungszeichen F1 gemäß dem Stand der Technik kann schwarz oder farbig sein. Die Anwendung von unterschiedlichen Farben als Erkennungszeichen für einen 2D-Code erhöht die Informationsdichte des 2D-Codes.

Die erfindungsgemäße Lösung der Aufgabe ist, ein fälschungssicherer Code mit einer hohen Informationsdichte bereit zu stellen, der einfach herstellbar ist.

Zur Herstellung des 3D-Codes 100 werden mindestens zwei 2D-Codes aufeinander gestapelt, um somit mehr Information zur Verfügung zu stellen (Fig. 2a, 2b).

Der 3D-Code 100 ist für den sichtbaren Wellenlängenbereich geeignet.

Gemäß einer ersten Ausführungsform der Erfindung umfasst der 3D-Code 100 einen Träger 3 und mindestens einen ersten und einen zweiten QR-Code 1, 2 (Fig. 2a, 2b).

Die QR-Codes 1, 2 sind zweidimensionale n x m Matrix-Codes. Für die Matrix ist "n" die Anzahl der Zeilen Zeilenanzahl) und "m" die Anzahl der Spalten Spaltenanzahl).

Der Träger 3 ist im Wesentlichen ein flächiger Träger. Der flächige Träger hat eine Bezugsfläche, die in einem kartesischen Koordinatensystem parallel zu der Ebene XY orientiert ist.

Der erste QR-Code 1 weist n x m Felder 11, 12, 13, 14 auf.

Der zweite QR-Code 2 weist n x m Felder 21, 22, 23, 24 auf.

Der zweite QR-Code 2 ist unmittelbar auf dem Träger 30 aufgebracht.

Der erste QR-Code 1 ist dann auf den zweiten QR-Code 2 aufgebracht.

Die Felder 11, 12, 13, 14 des ersten QR-Codes 1 überdecken die Felder 21, 22, 23, 24 des zweiten QR-Codes 2. Somit bildet das Feld 11 des ersten QR-Codes 1 zusammen mit dem Feld 21 des zweiten QR-Codes 2 in der Richtung +Z des kartesischen Koordinatensystems einen Stapel S1. Analog bildet das Feld 12 mit dem Feld 22 einen Stapel S2.

Die Felder 11, 12, 13, 14 des ersten QR-Codes 1 und die Felder 21, 22, 23, 24 des zweiten QR-Codes 2 sind farbige, transparente Felder. Für die Auswahl der Farben für die farbigen Felder müssen mindestens zwei unterschiedliche Farben verfügbar sein.

Für die n x m Matrix ist n $\geq$ 1 und m $\geq$ 2.

Der Träger 3 ist ein transparentes Substrat.

Da die Felder der mindestens zwei QR-Codes 1, 2 auch transparent sind, kann ein Licht Strahl, der auf den ersten QR-Code 1 gerichtet ist, durch den zweiten QR-Code 2 und den Träger 3 passieren. Deswegen ist der 3D-Code 100 gemäß dieser Ausführungsform ein transmissiver 3D-Code (Fig. 3a).

Das Substrat kann farblos oder farbig sein.

Das Substrat kann eine Dicke von 0,01 bis 1,0 mm und bevorzugt 0,1 bis 0,3 mm haben.

Die Farbschicht kann eine Dicke von 0,001 bis 0,1 mm und bevorzugt 0,05 mm haben. Der Farbschichtdickenberiech enthält 100 verschiedene Dicken zwischen 1 bis 100 $\mu$m mit jeweils einem Dickenzuwachs von 1 $\mu$m. Diese sind 1, 2, 3, 4, 5, 6 ... 94, 95, 96, 97, 98, 99, 100 $\mu$m.

Der farbige Kunststoff-Film kann eine Dicke von 0,1 bis 1,0 mm und bevorzugt 0,5 mm haben. Der Schichtdickenberiech enthält Dicken 0,1 / 0,2 / 0,3 / 0,4 / 0,5 / 0,6 / 0,7 / 0,8 / 0,9 / 1,0 mm.

Gemäß einer zweiten Ausführungsform des 3D-Codes 100 ist der Träger 3, ein Reflektor mit einer reflektierenden Fläche. Die reflektierende Fläche des Reflektors ist dem QR-Code 2 zugewandt. Da die Felder der mindestens zwei QR-Codes 1, 2 transparent sind, kann ein Lichtstrahl, der auf den ersten QR-Code 1 gerichtet ist, durch den zweiten QR-Code 2 passieren. Jedoch der Reflektor reflektiert diesen Lichtstrahl zurück. Der Lichtstrahl passiert zuerst den zweiten QR-Code 2 und dann den ersten QR-Code 1. Der 3D-Code 100 ist gemäß dieser Ausführungsform ein reflektiver 3D-Code (Fig. 3b).

Der 3D-Code 100 kann ein Substrat 10 aufweisen, das zwischen dem ersten QR-Code 1 und dem zweiten QR-Code 2 angeordnet ist.

D.h., jeder QR-Code 1, 2 wird jeweils zuerst auf ein Substrat aufgebracht und dann werden die Substrate aufeinander gelegt und luftblasenfrei zusammengefügt. Das kann die Als eine Alternative für das Herstellungsverfahren des 3D-Codes 100 hilfreich sein.

Das Substrat 10 kann ein transparentes, farbloses oder farbiges Substrat sein.

Der 3D-Code 100 kann von einer Schutzschicht 4 umgeben, umhüllt bzw. geschützt sein. Die Schutzschicht 4 kann eine transparente, farblose oder farbige Folie sein.

Die Schutzschicht 4 kann ein transparenter, farbloser oder farbiger Lack sein.

Die Schutzschicht 4 kann UV-Schutz aufweisen.

Die Schutzschicht 4 kann den 3D-Code 100 gegen äußere Einwirkungen schützen.

Die Schutzschicht 4 als eine Folie kann eine Dicke von 0,01 bis 1,0 mm und bevorzugt 0,1 bis 0,3 mm haben.

Die Schutzschicht 4 als eine Lackschicht kann eine Dicke von 0,001 bis 0,1 mm und bevorzugt 0,05 mm haben. Der Lackschichtdickenberiech enthält 100 verschiedene Dicken zwischen 1 bis 100 $\mu$m mit jeweils einem Dickenzuwachs von 1 $\mu$m. Diese sind 1, 2, 3, 4, 5, 6 ... 94, 95, 96, 97, 98, 99, 100 $\mu$m.

Die Schutzschicht 4 als ein Kunststoff-Film kann eine Dicke von 0,1 bis 1,0 mm und bevorzugt 0,5 mm haben. Der Schichtdickenberiech enthält Dicken 0,1 / 0,2 / 0,3 / 0,4 / 0,5 / 0,6 / 0,7 / 0,8 / 0,9 / 1,0 mm.

Gemäß einer weiteren Ausführungsform der Erfindung wird der 3D-Code 100 in einem Computerimplementierten Verfahren hergestellt.

Das Computerimplementierten Verfahren umfasst folgende Schritte:
Bereitstellung eines Computerprogramms basiert auf einem Algorithmus, der die Reihenfolge der Herstellungsschritte auf Basis von vordefinierten und in einer Datenbank hinterlegten Informationen steuert.

Die in der Datenbank hinterlegten Informationen sind:

die Anzahl der herzustellenden 3D-Codes,
die Anzahl der QR-Codes, die Anzahl der Zeilen und Spalten der QR-Codes, die einem 3D-Code, implementiert werden,
die Anzahl der Farben für die farbigen Felder der QR-Codes, die mindestens zwei unterschiedliche Farben sind,
die Dicke der farblichen Felder, die für alle QR-Codes gleich oder unterschiedlich sind,
die Größe und die Form der farblichen Felder,
ob der Träger als Reflektor oder lichtdurchlässiges Substrat auszuführbar ist sowie die Dicke des Substrats,
ob die Aufbringung der farbigen Felder der QR-Codes mittels eines digitalen Druckers oder mittels eines 3D-Druckers durchgeführt wird.

Wenn farbige Felder der QR-Codes als Farbschichten ausgeführt werden, dann muss für die Aufbringung der Farbschichten ein Digitaldrucker bereitgestellt werden, der ein Laserdrucker oder Tintenstrahldrucker sein kann, womit auch Lacke aufgebracht werden können.

Wenn farbige Felder der QR-Codes als farbige Kunststoff-Filme ausgeführt werden, dann muss für die Aufbringung der Kunststoff-Filme ein 3D-Drucker bereitzustellen werden, der ein marktüblicher Kunststoff-3D-Drucker sein kann. Die Aufbringung von Kunststoff-Filmen kann auch mittels der aus dem Stand der Technik bekannten additiven Fertigung stattfinden. Das Herstellverfahren eines 3D-Druckers bzw. der additiven Fertigung sind elektronisch steuerbar und können in einem Computerimplementierten Herstellverfahren eingesetzt werden.

Der farbige Kunststoff-Film kann eine Dicke von 0,1 bis 1,0 mm und bevorzugt 0,5 mm haben. Der Schichtdickenbereich enthält Dicken 0,1 / 0,2 / 0,3 / 0,4 / 0,5 / 0,6 / 0,7 / 0,8 / 0,9 / 1,0 mm.

Desweiteren ist einen im Wesentlichen flächigen Trägers 3 bereitzustellen, dessen Bezugsfläche in einem kartesischen Koordinatensystem parallel zu der Ebene XY orientiert ist Fig. 2a, 2b). Es werden n x m farbigen, transparenten Feldern 21, 22, 23, 24 auf den Träger 3 aufgebracht, um somit einen zweiten QR-Code 2 auszubilden. Danach werden weiteren n x m farbigen, transparenten Feldern 11, 12, 13, 14 auf die Felder 21, 22, 23, 24 aufgebracht, um somit einen ersten QR-Code 1 auszubilden.

Weil zuerst der zweite QR-Code 2 auf den Träger 3 und dann der erste QR-Code 1 oben auf den zweiten QR-Code 2 aufgebracht sind, wird beim Blicken auf einen fertiggestellten 3D-Code 100 nur der erste QR-Code 1 gesichtet. Im Grunde genommen ist es unwesentlich, in welcher Reihenfolge die QR-Codes bezeichnet werden, wichtig ist, dass die Reihenfolge für die Datenbank und für das Computerprogramm, die für das Herstellverfahren verwendet werden, eine Zuordnung der QR-Codes definiert ist.

Aus den Feldern 11, 12, 13, 14 des ersten QR-Codes 1 und den Feldern 21, 22, 23, 24 des zweiten QR-Codes 2 werden Stapel S1, S2, S3, S4 in der Richtung +Z ausgebildet (Fig. 2a). Gemäß den Informationen aus der Datenbank ist n $\geq$ 1 und m $\geq$ 2.

Für die Ausführung des Trägers 3 gibt es zwei Alternativen (Fig. 3a, 3b).

Für die erste Alternative ist der Träger ein transparentes, farbloses oder farbiges Substrat (Fig. 3a). Für die zweite Alternative ist der Träger ein Reflektor mit einer reflektierenden Fläche, die auf den QR-Code 2 zugewandt ist (Fig. 3b). Wie bereits in anderen Ausführungsformen erwähnt kann eine Schutzschicht 4 den 3D-Code 100 umgeben (Fig. 2b).

Gemäß einer weiteren Ausführungsform der Erfindung wird ein System zum Scannen des 3D-Codes 100 bereitgestellt.

Das System zum Scannen eines 3D-Codes 100, umfasst einen 3D-Code 100, eine Lichtquelle L mit einer Lichtintensität $I_0$ und einen Scanner 200 (Fig. 3a, 3b).

Für die Ausführung des 3D-Codes 100 gibt es zwei Alternativen, weil der Träger 3 des 3D-Codes 100 ein lichtdurchlässiges Substrat oder ein Reflektor sein kann.

Wenn der Träger 3 gemäß der ersten Alternative ein lichtdurchlässiges, farbloses oder farbiges Substrat ist, passiert der von der Lichtquelle L in Richtung L1 gesendete vordefinierte Lichtstrahl den 3D-Code 100 und wird als ein empfangener Lichtstrahl in Richtung L2 vom Scanner 200 empfangen. In diesem Fall sind die Lichtstrahlrichtungen L1 und L2 identisch (Fig. 3a).

Die Lichtquelle L wird vor dem 3D-Code 100 positioniert, die einen Lichtstrahl in Richtung L1, im Wesentlichen senkrecht zu dem ersten QR-Code 1 senden kann. Somit passiert der Lichtstrahl durch den Stapel S1, S2, S3, S4 und deswegen nach dem der Lichtstrahl den 3D-Code 100 verlässt, wird seine Lichtintensität I geschwächt.

Fig. 3a zeigt, dass der 3D-Code 100 für die erste Alternative (Träger = lichtdurchlässiges Substrat) zwischen der Lichtquelle L und dem Scanner 200 positioniert und der Scanner 200 dem Träger 3 des 3D-Codes 100 zugewandt ist. Nun kann der geschwächte Lichtstrahl mit der Lichtintensität I von dem Scanner 200 zur Auswertung empfangen werden.

Wenn der Träger 3 gemäß der zweiten Alternative ein Reflektor ist, reflektiert der von der Lichtquelle L in Richtung L1 gesendete vordefinierte Lichtstrahl am Reflektor und passiert wieder die QR-Codes 2 und 1 in Richtung L2. Lichtstrahlrichtungen L1 und L2 sind entgegengesetzt (Fig. 3b). Der Reflektor hat eine reflektierende Fläche, die dem QR-Codes 2 zugewandt ist. Der Scanner 200 ist dem QR-Code 1 zugewandt und ist neben der Lichtquelle L positioniert. Der geschwächte, zurückreflektiete Lichtstrahl mit der geschwächten Lichtintensität I kann von dem Scanner 200 zur Auswertung empfangen werden.

Gemäß einer weiteren Ausführungsform der Erfindung wird ein Computerimplementiertes Verfahren zum Scannen des 3D-Codes 100 bereitgestellt.

Computerimplementiertes Scann-Verfahren umfasst folgende Schritte:
Bereitstellung eines Computerprogramms basiert auf einem Algorithmus, der die Reihenfolge des Scann-Verfahrens auf Basis von vordefinierten und in einer Datenbank hinterlegten Informationen steuert und das Ergebnis des Scannens validiert.

Die in der Datenbank hinterlegten Informationen sind:

Optische Eigenschaften aller möglichen in einem Stapel der QR-Codes vorkommenden Farbkombinationen für die festgelegten Farben für die farbigen Felder der QR-Codes.
Optische Eigenschaften sind die Wellenlänge $\lambda$ der jeweiligen Farbkombination der festgelegten Farben sowie die Farbwerte der resultierenden Farbe der jeweiligen Farbkombination,

und die Intensität I des durch die farbigen Felder durchgelassenen Lichtes in Abhängigkeit von der Anfangsintensität des Lichtstrahls $I_0$ sowie der Farbe des von der Lichtquelle gesendeten Lichtstrahls,

und die Farbwerte aller möglichen in einem Stapel der QR-Codes vorkommenden Farbkombinationen für die festgelegten Farben der farbigen Felder der QR-Codes, in Abhängigkeit von der Variation der Anfangslichtintensität $I_0$ sowie der Farbe des von der Lichtquelle gesendeten Lichtstrahls.

Farbkombination bedeutet hier die Berücksichtigung aller Farben der farbigen Felder in einem Stapel der QR-Codes, in dem Sinne, dass wenn ein Lichtstrahl den Stapel passiert, enthält er als aus dem Stapel austretender Lichtstrahl den Einfluss aller passierten, farbigen Felder. Die optische Eigenschaft der jeweiligen Farbkombination bedeutet somit die optische Eigenschaft des austretenden Lichtstrahls, der durch die farbigen Felder eines Stapels der QR-Codes passiert ist.

Für das Computerimplementierte Verfahren zum Scannen des 3D-Codes 100 wird einen Scanner 200 zum Scannen des 3D-Codes 100 bereitgestellt.

Der Scanner 200 ist für die Messung eines oder mehrerer Lichtparameter ausgebildet.

Die Parameter sind Lichtintensität, Lichtwellenlänge und Lichtfarbwerte.

Weiter wird eine Lichtquelle L mit einer Lichtintensität $I_0$ bereitgestellt.

Ein 3D-Code 100 wird bereitgestellt.

Wie für eine der vorangehenden Ausführungsformen beschrieben gibt es für den 3D-Code 100 zwei Alternativen, weil der Träger 3 des 3D-Codes 100 ein lichtdurchlässiges Substrat oder ein Reflektor sein kann.

Gemäß der ersten Alternative (Träger 3= lichtdurchlässiges Substrat) passiert der von der Lichtquelle L in Richtung L1 gesendete Lichtstrahl den 3D-Code 100 und wird als ein empfangenen Lichtstrahl in Richtung L2 vom Scanner 200 empfangen. In diesem Fall sind die Lichtstrahlrichtungen L1 und L2 identisch (Fig. 3a).

D.h., der Lichtstrahl trifft den ersten QR-Code 1 im Wesentlichen senkrecht und passiert durch den Stapel S1, S2, S3, S4, weswegen der Lichtstrahl schwächer wird und eine geschwächte Lichtintensität I aufweist.

Der 3D-Code 100 wird zwischen der Lichtquelle L und dem Scanner 200 positioniert.

Der Scanner 200 ist dem Träger 3 des 3D-Codes 100 zugewandt, um den geschwächten Lichtstrahl mit der Lichtintensität I zu empfangen und ihn auszuwerten.

Der Scanner 200 vergleicht zur Auswertung, die Intensität I aus der Datenbank mit der beim Scannen empfangenen Lichtintensität I und bei einer Übereinstimmung verifiziert die Authentizität des 3D-Codes 100, andernfalls wird der 3D-Code 100 als ungültig deklariert.

Alternativ oder ergänzend kann der Scanner 200 zur Auswertung, die relevante Wellenlänge λ des Lichtes aus der Datenbank mit der Wellenlänge λ des beim Scannen empfangenen Lichtes vergleichen und bei einer Übereinstimmung, die Authentizität des 3D-Codes 100 verifizieren, andernfalls den 3D-Code 100 als ungültig deklarieren.

Alternativ oder ergänzend kann der Scanner 200 zur Auswertung, die relevanten Farbwerte des Lichtes aus der Datenbank mit den Farbwerten des beim Scannen empfangenen Lichtes vergleichen und bei einer Übereinstimmung, die Authentizität des 3D-Codes 100 verifizieren, andernfalls den 3D-Code 100 als ungültig deklarieren.

Gemäß der zweiten Alternative (Träger 3= Reflektor) passiert der von der Lichtquelle L in Richtung L1 gesendete Lichtstrahl durch den Stapel (S1, S2, S3, S4) und trifft den Reflektor und reflektiert in Richtung (L2). Der reflektierte Lichtstrahl wird schwächer und weist eine geschwächte Lichtintensität (I) auf.

Der Scanner 200 ist dem QR-Code 1 zugewandt und ist neben der Lichtquelle L positioniert, um die optische Eigenschaften des reflektierten Lichtes wie zuvor beschrieben, auszuwerten.

Eine sinnvolle Kombination der verschiedenen Ausführungsformen ist machbar.

**Bezugszeichenliste**

1        QR-Code 1

2        QR-Code 2

3        Träger

4        Schutzschicht

10       Substrat 10

11-14    Felder 11 bis 14 zugehörig zum QR-Code 1

21-24    Felder 21 bis 24 zugehörig zum QR-Code 2

100      3D-Code

200      Scanner

$I_0$      Lichtintensität der Lichtquelle L

I        Lichtintensität des geschwächten Lichtstrahls

L        Lichtquelle

L1       Richtung des von der Lichtquelle L entsendeten Lichtstrahls

L2       Richtung des von dem Scanner 200 empfangenen Lichtstrahls

S1       Stapel 1

S2       Stapel 2

S3       Stapel 3

S4       Stapel 4

XYZ      Kartesisches Koordinatensystem

XY       XY-Ebene des kartesischen Koordinatensystems

+Z       Positive Richtung der Z-Achse des kartesischen Koordinatensystems

$\lambda_0$      Wellenlänge der Lichtquelle L

$\lambda$        vom Scanner empfangene Wellenlänge

**Patentansprüche**

1.  3D-Code (100) für den sichtbaren Wellenlängenbereich, umfassend:

    einen Träger (3), und
    mindestens einen ersten und einen zweiten QR-Code (1, 2),
    wobei die QR-Codes (1, 2) zweidimensionale n x m Matrix-Codes auf Ebenen parallel zu einer XY-Ebene im kartesischen Koordinatensystem sind,
    wobei n die Zeilenanzahl und m die Spaltenanzahl für die Matrix sind,
    wobei der Träger (3) ein flächiger Träger ist, dessen Fläche in einem kartesischen Koordinatensystem parallel zu der XY-Ebene orientiert ist,
    wobei der zweite QR-Code (2) n x m Felder (21, 22, 23, 24) aufweist, die unmittelbar auf dem Träger (3) aufgebracht sind,
    wobei der erste QR-Code (1) n x m Felder (11, 12, 13, 14) aufweist, die überlappend auf den Feldern (21, 22, 23, 24) des zweiten QR-Codes (2) aufgebracht sind,
    wobei n ≥ 1 und m ≥ 2 ist,
    wobei aus den Feldern (11, 12, 13, 14) des ersten QR-Codes (1) und den Feldern (21, 22, 23, 24) des zweiten QR-Codes (2) Stapel (S1, S2, S3, S4) in einer Richtung +Z, senkrecht zur XY-Ebene im kartesischen Koordinatensystem, ausbildbar sind,
    **gekennzeichnet dadurch, dass**
    die Felder (11, 12, 13, 14; 21, 22, 23, 24) des ersten QR-Codes (1) und des zweiten QR-Codes (2) farbige, transparente Felder sind, welche mindestens zwei unterschiedliche Farben aufweisen,

wobei der Träger (3) ein transparentes, farbloses oder ein transparentes, farbiges Substrat ist.

2. 3D-Code (100) für den sichtbaren Wellenlängenbereich, umfassend:

einen Träger (3), und
mindestens einen ersten und einen zweiten QR-Code (1, 2),
wobei die QR-Codes (1, 2) zweidimensionale n x m Matrix-Codes auf Ebenen parallel zu einer XY-Ebene im kartesischen Koordinatensystem sind,
wobei n die Zeilenanzahl und m die Spaltenanzahl für die Matrix sind,
wobei der Träger (3) ein flächiger Träger ist, dessen Fläche in einem kartesischen Koordinatensystem parallel zu der XY-Ebene orientiert ist,
wobei der zweite QR-Code (2) n x m Felder (21, 22, 23, 24) aufweist, die unmittelbar auf dem Träger (3) aufgebracht sind,
wobei der erste QR-Code (1) n x m Felder (11, 12, 13, 14) aufweist, die überlappend auf den Feldern (21, 22, 23, 24) des zweiten QR-Codes (2) aufgebracht sind,
wobei n $\geq$ 1 und m $\geq$ 2 ist,
wobei aus den Feldern (11, 12, 13, 14) des ersten QR-Codes (1) und den Feldern (21, 22, 23, 24) des zweiten QR-Codes (2) Stapel (S1, S2, S3, S4) in einer Richtung +Z, senkrecht zur XY-Ebene im kartesischen Koordinatensystem, ausbildbar sind,
**gekennzeichnet dadurch, dass**
die Felder (11, 12, 13, 14; 21, 22, 23, 24) des ersten QR-Codes (1) und des zweiten QR-Codes (2) farbige, transparente Felder sind, welche mindestens zwei unterschiedliche Farben aufweisen,
wobei der Träger (3) ein Reflektor mit einer reflektierenden Fläche ist,
wobei die reflektierende Fläche des Reflektors dem zweiten QR-Code (2) zugewandt ist.

3. 3D-Code (100) nach Anspruch 1 oder 2, wobei eine Schutzschicht (4) den 3D-Code (100) umgibt.

4. Verfahren zur Herstellung eines 3D-Codes (100) nach Anspruch 1 oder 2, umfassend folgende Schritte:

Bereitstellen eines Computerprogramms basiert auf einem Algorithmus, der die Reihenfolge der Herstellungsschritte auf Basis von vordefinierten und in einer Datenbank hinterlegten Informationen steuert,
wobei die Informationen sind:

die Seriennummer der 3D-Codes,
die Personalisierung der 3D-Codes zur Sicherstellung der Einmaligkeit eines jeden 3D-Codes,
die Anzahl der herzustellenden 3D-Codes,
die Anzahl der QR-Codes, die Anzahl der Zeilen und Spalten der QR-Codes, die in einem 3D-Code, implementiert werden,
die Anzahl der Farben für die farbigen Felder der QR-Codes, die mindestens zwei unterschiedliche Farben sind,
die Dicke der farblichen Felder, die für alle QR-Codes gleich oder unterschiedlich sind,
die Größe und die Form der farblichen Felder,
ob der Träger als Reflektor oder lichtdurchlässiges Substrat auszuführbar ist sowie die Dicke des Substrats,
ob die Aufbringung der farbigen Felder der QR-Codes mittels eines digitalen Druckers oder mittels eines 3D-Druckers durchgeführt wird,
Bereitstellen eines digitalen Druckers oder eines 3D-Druckers
Bereitstellen eines flächigen Trägers (3), dessen Fläche in einem kartesischen Koordinatensystem parallel zu der XY-Ebene orientiert ist,
Aufbringen von n x m farbigen, transparenten Feldern (21, 22, 23, 24) auf den Träger (3), um somit einen zweiten QR-Code (2) auszubilden,
Aufbringen von weiteren n x m farbigen, transparenten Feldern (11, 12, 13, 14) auf die Felder (21, 22, 23, 24), um somit einen ersten QR-Code (1) auszubilden,
wobei somit aus den Feldern (11, 12, 13, 14) des ersten QR-Codes (1) und den Feldern (21, 22, 23, 24) des zweiten QR-Codes (2) Stapel (S1, S2, S3, S4) in der Richtung +Z ausgebildet werden,
wobei gemäß den Informationen aus der Datenbank n $\geq$ 1 und m $\geq$ 2 ist,
wobei der Träger (3) ein transparentes, farbloses oder ein transparentes, farbiges Substrat ist, oder
wobei der Träger (3) ein Reflektor mit einer reflektierenden Fläche ist,

wobei die reflektierende Fläche des Reflektors dem zweiten QR-Code (2) zugewandt ist.

5. Verfahren zur Herstellung eines 3D-Codes (100) nach Anspruch 4, wobei das Aufbringen der n x m farbigen, transparenten Felder (11, 12, 13, 14; 21, 22, 23, 24) mittels des digitalen Druckers durchgeführt wird, wobei der digitale Drucker ein Tintenstrahlfarbdrucker oder ein Laserfarbdrucker ist.

6. Verfahren zur Herstellung eines 3D-Codes (100) nach Anspruch 4, wobei das Aufbringen der n x m farbigen, transparenten Felder (11, 12, 13, 14; 21, 22, 23, 24) mittels des 3D-Druckers durchgeführt wird, wobei der 3D-Drucker ein Kunststoff-3D-Drucker ist.

7. Verfahren zur Herstellung eines 3D-Codes (100) nach einem der Ansprüche 4 bis 6, umfassend den folgenden Schritt: Aufbringung einer Schutzschicht (4) auf dem 3D-Code (100).

8. Verfahren zum Scannen eines 3D-Codes nach Anspruch 1, umfassend folgende Schritte:

Bereitstellen eines Computerprogramms basiert auf einem Algorithmus, der die Reihenfolge des Scann-Verfahrens auf Basis von vordefinierten und in einer Datenbank hinterlegten Informationen steuert und das Ergebnis des Scannens validiert, wobei die Informationen sind:

Seriennummer der 3D-Codes, optische Eigenschaften aller möglichen in einem Stapel (S 1, S2, S3, S4) der QR-Codes vorkommenden Farbkombinationen für die festgelegten Farben für die farbigen Felder der QR-Codes, diese sind die Wellenlänge der jeweiligen Farbkombination der festgelegten Farben oder / und Farbwert der resultierenden Farbe der jeweiligen Farbkombination, Intensität des durch die farbigen Felder durchgelassenen Lichtes in Abhängigkeit von einer vordefinierten Anfangslichtintensität des Lichtstrahls und der Farbe des Lichtes, optische Eigenschaften aller möglichen in dem Stapel (S 1, S2, S3, S4) der QR-Codes vorkommenden Farbkombinationen für die festgelegten Farben für die farbigen Felder der QR-Codes, in Abhängigkeit von der Variation der Anfangslichtintensität sowie der Farbe des von der Lichtquelle gesendeten Lichtstrahls, Bereitstellen eines 3D-Codes (100) nach Anspruch 1, Bereitstellen eines Scanners (200) zum Scannen des 3D-Codes (100), wobei der Scanner zur Lichtintensitätsmessung oder / und Lichtwellenlängenmessung oder / und Erfassung der Farbwerte ausgebildet ist, Bereitstellen einer Lichtquelle (L) mit der vordefinierten Anfangslichtintensität, wobei die Lichtquelle (L) vor dem 3D-Code (100) derart positioniert wird, dass die Lichtquelle (L) einen Lichtstrahl mit der vordefinierten Anfangslichtintensität in Richtung L1, senkrecht zu dem ersten QR-Code (1) senden kann, und somit der Lichtstrahl durch den Stapel (S1, S2, S3, S4) passiert, wobei der durch den Stapel (S1, S2, S3, S4) passierte Lichtstrahl eine geschwächte Lichtintensität aufweist, wobei der 3D-Code (100) zwischen der Lichtquelle (L) und dem Scanner (200) positioniert wird, wobei der Scanner (200) dem Träger (3) des 3D-Codes (100) zugewandt ist, um den Lichtstrahl mit der geschwächten Lichtintensität aus der Richtung L2 zu empfangen und ihn auszuwerten, wobei der Scanner (200) zur Auswertung, die Intensität aus der Datenbank mit der beim Scannen empfangenen Lichtintensität vergleicht und bei einer Übereinstimmung, die Authentizität des 3D-Codes (100) verifiziert, andernfalls den 3D-Code (100) als ungültig deklariert, und / oder wobei der Scanner (200) zur Auswertung, die Wellenlänge des Lichtes aus der Datenbank mit der Wellenlänge des beim Scannen empfangenen Lichtes vergleicht und bei einer Übereinstimmung, die Authentizität des 3D-Codes (100) verifiziert, andernfalls den 3D-Code (100) als ungültig deklariert, und / oder wobei der Scanner (200) zur Auswertung, die Farbwerte des Lichtes aus der Datenbank mit den Farbwerten des beim Scannen empfangenen Lichtes vergleicht und bei einer Übereinstimmung, die Authentizität des 3D-Codes (100) verifiziert, andernfalls den 3D-Code (100) als ungültig deklariert. Der Scanner vergleicht zur Auswertung die Farbwerte des Lichtes aus der Datenbank mit den Farbwerten des beim Scannen empfangenen Lichtes. Bei einer Übereinstimmung wird die Authentizität des 3D-Codes (100) verifiziert, andernfalls wird der 3D-Code (100) als ungültig deklariert.

9. Verfahren zum Scannen eines 3D-Codes (100) nach Anspruch 2, umfassend folgende Schritte:

Bereitstellen eines Computerprogramms basiert auf einem Algorithmus, der die Reihenfolge des Scann-Verfahrens auf Basis von vordefinierten und in einer Datenbank hinterlegten Informationen steuert und das Ergebnis des Scannens validiert,
wobei die Informationen sind:

Seriennummer der 3D-Codes,
optische Eigenschaften aller möglichen in einem Stapel (S 1, S2, S3, S4) der QR-Codes vorkommenden Farbkombinationen für die festgelegten Farben für die farbigen Felder der QR-Codes,
diese sind die Wellenlänge der jeweiligen Farbkombination der festgelegten Farben oder / und
Farbwert der resultierenden Farbe der jeweiligen Farbkombination,
Intensität des durch die farbigen Felder durchgelassenen Lichtes in Abhängigkeit von einer vordefinierten Anfangslichtintensität des Lichtstrahls und der Farbe des Lichtes,
optische Eigenschaften aller möglichen in dem Stapel (S 1, S2, S3, S4) der QR-Codes vorkommenden Farbkombinationen für die festgelegten Farben für die farbigen Felder der QR-Codes, in Abhängigkeit von der Variation der Anfangslichtintensität sowie der Farbe des von der Lichtquelle gesendeten Lichtstrahls,
Bereitstellen eines 3D-Codes (100) nach Anspruch 2,
Bereitstellen eines Scanners (200) zum Scannen des 3D-Codes (100),
wobei der Scanner zur Lichtintensitätsmessung oder / und Lichtwellenlängenmessung oder / und Erfassung der Farbwerte ausgebildet ist,
Bereitstellen einer Lichtquelle (L) mit der vordefinierten Anfangslichtintensität,
wobei der Lichtstrahl durch den Stapel (S 1, S2, S3, S4) passiert,
wobei der durch den Stapel (S1, S2, S3, S4) passierte Lichtstrahl eine geschwächte Lichtintensität aufweist,
wobei die Lichtquelle (L) vor dem 3D-Code (100) derart positioniert wird, dass die Lichtquelle (L) den Lichtstrahl mit der vordefinierten Anfangslichtintensität in Richtung L1,
senkrecht zu dem ersten QR-Code (1) senden kann,
wobei der Lichtstrahl am Reflektor des Trägers (3) in Richtung L2 zurück reflektiert wird,
wobei der Scanner (200) dem QR-Code (1) zugewandt und neben der Lichtquelle (L) positioniert ist, um den Lichtstrahl mit der geschwächten Lichtintensität zu empfangen und
ihn auszuwerten,
wobei der Scanner (200) zur Auswertung, die Intensität aus der Datenbank mit der beim Scannen empfangenen Lichtintensität vergleicht und bei einer Übereinstimmung, die Authentizität des 3D-Codes (100) verifiziert, andernfalls den 3D-Code (100) als ungültig deklariert, und / oder
wobei der Scanner (200) zur Auswertung, die Wellenlänge des Lichtes aus der Datenbank mit der Wellenlänge des beim Scannen empfangenen Lichtes vergleicht und bei einer Übereinstimmung, die Authentizität des 3D-Codes (100) verifiziert, andernfalls den 3D-Code (100) als ungültig deklariert, und / oder
wobei der Scanner (200) zur Auswertung, die Farbwerten des Lichtes aus der Datenbank mit den Lichtfarbeigenschaften des beim Scannen empfangenen Lichtes vergleicht und bei einer Übereinstimmung, die Authentizität des 3D-Codes (100) verifiziert, andernfalls den 3D-Code (100) als ungültig deklariert.

10. System zum Scannen eines 3D-Codes (100) gemäß Anspruch 1, umfassend:

ein Computerprogramm basierend auf einem Algorithmus, in dem die Reihenfolge des Scann-Verfahrens auf Basis von vordefinierten und in einer Datenbank hinterlegten Informationen steuerbar und das Ergebnis des Scannens validierbar ist,
wobei die Informationen sind:

Seriennummer der 3D-Codes,
optische Eigenschaften aller möglichen in einem Stapel der QR-Codes vorkommenden Farbkombinationen für die festgelegten Farben für die farbigen Felder der QR-Codes,
diese sind die Wellenlänge der jeweiligen Farbkombination der festgelegten Farben oder / und
Farbwert der resultierenden Farbe der jeweiligen Farbkombination,
wobei das System weiter umfasst:

einen Scanner (200) zum Scannen des 3D-Codes (100), mit
einer Lichtquelle (L) mit einer vordefinierten Anfangslichtintensität,
wobei die Lichtfarbe oder / und die Anfangslichtintensität der Lichtquelle (L) variabel sind,
wobei die Lichtquelle (L) vor dem 3D-Code (100) derart positioniert ist, dass die Lichtquelle (L) einen Lichtstrahl mit einer vordefinierten Anfangslichtintensität in Richtung L1, senkrecht zu dem ersten QR-Code (1) senden kann, und somit der Lichtstrahl durch den Stapel (S1, S2, S3, S4) passiert,

wobei der durch den Stapel (S1, S2, S3, S4) passierte Lichtstrahl eine geschwächte Lichtintensität aufweist,

wobei der 3D-Code (100) zwischen der Lichtquelle (L) und dem Scanner (200) positioniert ist,

wobei der Scanner (200) dem Träger (3) des 3D-Codes (100) zugewandt ist und der Lichtstrahl mit der geschwächten Lichtintensität von dem Scanner (200) zur Auswertung der optischen Eigenschaften des Lichtstrahls empfangbar ist.

**11.** System zum Scannen eines 3D-Codes (100) gemäß Anspruch 2, umfassend:

ein Computerprogramm basierend auf einem Algorithmus, in dem die Reihenfolge des Scann-Verfahrens auf Basis von vordefinierten und in einer Datenbank hinterlegten Informationen steuerbar und das Ergebnis des Scannens validierbar ist,

wobei die Informationen sind:

Seriennummer der 3D-Codes,

optische Eigenschaften aller möglichen in einem Stapel der QR-Codes vorkommenden Farbkombinationen für die festgelegten Farben für die farbigen Felder der QR-Codes,

diese sind die Wellenlänge der jeweiligen Farbkombination der festgelegten Farben oder / und Farbwert der resultierenden Farbe der jeweiligen Farbkombination,

wobei das System weiter umfasst:

einen Scanner (200) zum Scannen des 3D-Codes (100), mit einer Lichtquelle (L) mit einer vordefinierten Anfangslichtintensität,

wobei die Lichtfarbe oder / und die vordefinierte Anfangslichtintensität der Lichtquelle (L) variabel sind,

wobei die Lichtquelle (L) vor dem 3D-Code (100) derart positioniert ist, dass die Lichtquelle (L) einen Lichtstrahl mit einer vordefinierten Anfangslichtintensität in Richtung L1, senkrecht zu dem ersten QR-Code (1) senden kann, und somit der Lichtstrahl durch den Stapel (S1, S2, S3, S4) passiert,

wobei der durch den Stapel (S1, S2, S3, S4) passierte Lichtstrahl eine geschwächte Lichtintensität aufweist,

wobei der 3D-Code (100) zwischen der Lichtquelle (L) und dem Scanner (200) positioniert ist,

wobei der Lichtstrahl am Reflektor in Richtung L2 zurückreflektierbar ist,

wobei der Scanner (200) dem QR-Code (1) zugewandt und neben der Lichtquelle (L) positioniert ist und

wobei der zurückreflektierte Lichtstrahl mit der geschwächten Lichtintensität von dem Scanner (200) zur Auswertung der optischen Eigenschaften des Lichtstrahls empfangbar ist.

**Claims**

**1.** 3D-Code (100) for the visible wavelength range, the 3D-code (100) comprising:

a carrier (3), and

at least a first and a second QR code (1, 2);

said QR codes (1, 2) being two-dimensional n x m matrix codes,

where n is the number of rows and m is the number of columns of the matrix,

where the carrier (3) being a flat carrier whose surface disposed parallel to the XY plane in a Cartesian coordinate system,

said second QR code (2) having n x m fields (21, 22, 23, 24) applied directly to said carrier (3) and said first QR code (1) having n x m fields (11, 12, 13, 14) applied in an overlapping manner on the fields (21, 22, 23, 24) of said second QR code (2);

where $n \geq 1$ and $m \geq 2$,

said fields (11, 12, 13, 14) of said first QR code (1) and said fields (21, 22, 23, 24) of said second QR code (2) forming stacks (S1, S2, S3, S4) in a direction +Z perpendicular to XY plane,

**characterized in that,**

said fields (11, 12, 13, 14; 21, 22, 23, 24) of said first QR code (1) and of said second QR code (2) being colored, transparent fields; and

said fields being formed of at least two different colors,

where the carrier (3) being a transparent, colorless substrate.

2. 3D-Code (100) for the visible wavelength range, the 3D-code (100) comprising:

a carrier (3), and
at least a first and a second QR code (1, 2);
said QR codes (1, 2) being two-dimensional n x m matrix codes,
where n is the number of rows and m is the number of columns of the matrix,
where the carrier (3) being a flat carrier whose surface disposed parallel to the XY plane in a Cartesian coordinate system,
said second QR code (2) having n x m fields (21, 22, 23, 24) applied directly to said carrier (3) and said first QR code (1) having n x m fields (11, 12, 13, 14) applied in an overlapping manner on the fields (21, 22, 23, 24) of said second QR code (2);
where $n \geq 1$ and $m \geq 2$,
said fields (11, 12, 13, 14) of said first QR code (1) and said fields (21, 22, 23, 24) of said second QR code (2) forming stacks (S1, S2, S3, S4) in a direction +Z perpendicular to XY plane,
**characterized in that,**
said fields (11, 12, 13, 14; 21, 22, 23, 24) of said first QR code (1) and of said second QR code (2) being colored, transparent fields; and
said fields being formed of at least two different colors,
where the carrier (3) being a reflector with a reflecting surface and said reflecting surface facing said second QR code (2).

3. 3D-Code (100) according to claim 1 or 2, further comprising a protective layer (4) surrounding the 3D-Code (100).

4. A method of producing a 3D-Code (100) according to claim 1 or 2, the method comprising the following steps:

providing a computer program based on an algorithm that is configured to control a sequence of manufacturing steps based on predefined information stored in a database, the predefined information being:

a serial number of the 3D-Codes;
a personalization of the 3D-Codes to ensure the uniqueness of each 3D-Code;
a number of 3D-Codes to be produced;
a number of QR codes and a number of rows and columns of QR codes to be implemented in a 3D-Code;
a number of colors for colored fields of the QR codes, with the colors being at least two different colors,
a thickness of the colored fields that are the same or different for all QR codes;
a size and a shape of the colored fields;
whether the carrier is a reflector or a translucent substrate, and the thickness of the substrate;
whether the colored fields of the QR codes are to be applied using a digital printer or using a 3D printer;
providing a digital printer or a 3D printer;
providing a flat carrier (3) having a surface that is oriented parallel to the an XY plane in a Cartesian coordinate system;
applying n x m colored, transparent fields (21, 22, 23, 24) to the carrier (3) to form a second QR code (2);
applying a further n x m colored, transparent fields (11, 12, 13, 14) on the transparent fields (21, 22, 23, 24) of the second QR code (2) to form a first QR code (1);
wherein the fields (11, 12, 13, 14) of the first QR code (1) and the fields (21, 22, 23, 24) of the second QR code (2) form stacks (S1, S2, S3, S4) in a direction +Z perpendicular to the XY plane;
wherein according to the information from the database $n \geq 1$ and $m \geq 2$;
wherein:

the carrier (3) is a transparent, colorless or a transparent colored substrate;
or
the carrier (3) is a reflector with a reflecting surface, and the reflecting surface of the reflector faces the second QR code (2).

5. Method according to claim 4, which comprises applying the n x m colored, transparent fields (11, 12, 13, 14; 21, 22, 23, 24) with the digital printer being an inkjet color printer or a laser color printer.

6. Method according to claim 4, which comprises applying the n x m colored, transparent fields (11, 12, 13, 14; 21, 22, 23, 24) with the 3D printer being a plastic 3D printer.

7. Method according to one of claims 4 to 6, which comprises applying a protective layer (4) to the 3D-Code (100).

8. A method of scanning a 3D-Code (100), the method comprising:
providing a 3D-Code according to claim 1:
providing a computer program with an algorithm that controls an order of a scanning procedure based on predefined information stored in a database and validates the result of the scanning, the information including:

a serial number of the 3D-Codes;
optical properties of all possible color combinations occurring in a stack (S1, S2, S3, S4) of QR codes for the specified colors for the colored for the colored fields of the QR codes;
being a wavelength of the respective color combination of the specified colors or/and color value of the resulting color of the respective color combination, and
an intensity of light transmitted through the colored fields depending on an initial intensity of the light beam and the color of the light;
optical properties of all possible colour combinations occurring in the stack (S1, S2, S3, S4) of QR codes for the specified colors for the colored fields of the QR codes on a variation of the initial light intensity and the color of the light beam sent by a light source;
providing a scanner (200) for scanning the 3D-Code (100),
the scanner being configured for at least of one a light intensity measurement, a light wavelength measurement, or a capturing of color values;
providing a light source (L) with a predefined light intensity,
and positioning the light source (L) in front of the 3D-Code (100) such that the light source (L) can send a predefined light beam in the direction L1, perpendicular to the first QR code (1), such that the light beam passes through the stack (S1, S2, S3, S4);
wherein the light beam passing through the stack (S1, S2, S3, S4) has a weakened light intensity;
wherein the 3D-Code (100) is positioned between the light source (L) and the scanner (200),
and wherein the scanner (200) faces the carrier (3) of the 3D-Code (100) in order to receive the light beam with the light weakened intensity from the direction L2 and to evaluate the light beam with the light weakened intensity;
the scanner (200) evaluating scanning results by performing at least one of the following:

comparing the intensity from the database with the light intensity received during scanning and, if there is a match, verifying the authenticity of the 3D-Code (100), otherwise declaring the 3D-Code (100) as invalid; and / or
comparing the wavelength of the light from the database with a wavelength of the light received during scanning and, if there is a match, verifying the authenticity of the 3D-Code (100), otherwise declaring the 3D-Code (100) as invalid; and / or
comparing the color values of the light from the database with a color values of the light received during scanning and, if there is a match, verifying the authenticity of the 3D-Code (100), otherwise declaring the 3D-Code (100) as invalid.

9. A method of scanning a 3D-Code (100), the method comprising:

providing a 3D-Code according to claim 2;
providing a computer program with an algorithm that controls an order of a scanning procedure based on predefined information stored in a database and validates the result of the scanning, the information including:

a serial number of the 3D-Codes;
optical properties of all possible color combinations occurring in a stack (S 1, S2, S3, S4) of QR codes for the specified colors for the colored for the colored fields of the QR codes;
being a wavelength of the respective color combination of the specified colors or/and color value of the resulting color of the respective color combination, and
an intensity of light transmitted through the colored fields depending on an initial intensity of the light beam and the color of the light;
optical properties of all possible colour combinations occurring in the stack (S1, S2, S3, S4) of QR codes for the specified colors for the colored fields of the QR codes on a variation of the initial light intensity and the color of the light beam sent by a light source;
providing a scanner (200) for scanning the 3D-Code (100), the scanner being configured for at least of one a light intensity measurement, a light wavelength measurement, or a capturing of color values;

providing a light source (L) with a predefined light intensity,
and positioning the light source (L) in front of the 3D-Code (100) such that the light source (L) can send a light beam with a predefined light intensity in the direction L1, perpendicular to the first QR code (1), such that the light beam passes through the stack (S1, S2, S3, S4);
wherein the light beam passing through the stack (S1, S2, S3, S4) has a weakened light intensity;
reflecting the light beam back at the reflector of carrier (3) in a direction L2;
the scanner (200) facing the QR code and being position next to the light source (L) in order
to receive the light beam with the light weakened intensity and to evaluate the light beam with the light weakened intensity;
the scanner (200) evaluating scanning results by performing at least one of the following:

comparing the intensity from the database with the light intensity received during scanning and, if there is a match, verifying the authenticity of the 3D-Code (100), otherwise declaring the 3D-Code (100) as invalid;
comparing the wavelength of the light from the database with a wavelength of the light received during scanning and, if there is a match, verifying the authenticity of the 3D-Code (100), otherwise declaring the 3D-Code (100) as invalid;
comparing the color values of the light from the database with a color values of the light received during scanning and, if there is a match, verifying the authenticity of the 3D-Code (100), otherwise declaring the 3D-Code (100) as invalid.

10. System for scanning a 3D-Code (100) of claim 1, the system comprising:
a computer program with an algorithm that controls an order of a scanning procedure based on predefined information stored in a database and validates the result of the scanning, the information including:

a serial number of the 3D-Codes;
optical properties of all possible color combinations occurring in a stack of QR codes for the specified colors for the colored for the colored fields of the QR codes;
being a wavelength of the respective color combination of the specified colors or/and color value of the resulting color of the respective color combination,
a scanner (200) for scanning the 3D-Code (100);
a light source (L) with a predefined light intensity, a variable light color, and/or a variable light intensity;
said light source (L) being positioned in front of the 3D-Code (100) to enable said light source (L) to send a light beam with a predefined light intensity in the direction L1, perpendicular to the first QR code (1), and to cause the light beam to pass through the stack (S1, S2, S3, S4);
wherein the light beam passing through the stack (S1, S2, S3, S4) has a weakened light intensity;
wherein the 3D-Code (100) is positioned between said light source (L) and said scanner (200);
wherein said scanner (200) faces the carrier (3) of the 3D-Code (100) and the light beam with the weakened light intensity is received by the scanner (200) for evaluation of the optical properties of the light beam.

11. System for scanning a 3D-Code (100) of claim 2, the system comprising:
a computer program with an algorithm that controls an order of a scanning procedure based on predefined information stored in a database and validates the result of the scanning, the information including:

a serial number of the 3D-Codes;
optical properties of all possible color combinations occurring in a stack (S1, S2, S3, S4) of QR codes for the specified colors for the colored for the colored fields of the QR codes;
being a wavelength of the respective color combination of the specified colors or/and color value of the resulting color of the respective color combination,
a scanner (200) for scanning the 3D-Code (100);
a light source (L) with a predefined light intensity, a variable light color, and/or a variable light intensity;
said light source (L) being positioned in front of the 3D-Code (100) to enable said light source (L) to send a light beam with a predefined light intensity in the direction L1, perpendicular to the first QR code (1), and to cause the light beam to pass through the stack (S1, S2, S3, S4);
wherein the light beam passing through the stack (S1, S2, S3, S4) has a weakened light intensity;
wherein the 3D-Code (100) is positioned between said light source (L) and said scanner (200);
wherein the light beam is reflected back at the reflector in a direction L2; and
wherein the scanner (200) faces the QR code (1) and is positioned next to the light source (L) and wherein the reflected light with the weakened light intensity is received by the scanner (200) to evaluate the optical properties of the light beam.

**Revendications**

1. Code 3D (100) pour la plage des longueurs d'onde visibles, comprenant:

   un support (3), et
   au moins un premier et un second code QR (1, 2),

      où les codes QR (1, 2) sont des codes matriciels n x m bidimensionnels sur des plans parallèles à un plan XY dans un système de coordonnées cartésiennes,
      où n est le nombre de lignes et m est le nombre de colonnes de la matrice,
      où le support (3) est un support plat dont la surface est orientée parallèlement au plan XY dans le système de coordonnées cartésiennes,
      où le second code QR (2) comporte n x m champs (21, 22, 23, 24) qui sont appliqués directement au support (3),
      où le premier code QR (1) comporte n x m champs (11, 12, 13, 14) qui sont appliqués en chevauchement sur les champs (21, 22, 23, 24) du second code QR (2),
      où n ≥ 1 et m ≥ 2,

      d'où parmi les champs (11, 12, 13, 14) du premier QR code (1) et les champs (21, 22, 23, 24) du second QR code (2) pile (S1, S2, S3, S4 ) peut être formé selon une direction +Z,
      perpendiculaire au plan XY dans le système de coordonnées cartésiennes,
      **caractérisé en ce que**
      les champs (11, 12, 13, 14 ; 21, 22, 23, 24) du premier code QR (1) et du second code QR (2) sont des champs transparents colorés qui présentent au moins deux couleurs différentes,
      où le support (3) est un substrat transparent, incolore ou transparent coloré.

2. Code 3D (100) pour la plage des longueurs d'onde visibles, comprenant:

   un support (3), et
   au moins un premier et un second code QR (1, 2),

      où les codes QR (1, 2) sont des codes matriciels n x m bidimensionnels sur des plans parallèles à un plan XY dans un système de coordonnées cartésiennes,
      où n est le nombre de lignes et m est le nombre de colonnes de la matrice,
      où le support (3) est un support plat dont la surface est orientée parallèlement au plan XY dans le système de coordonnées cartésiennes,
      où le second code QR (2) comporte n x m champs (21, 22, 23, 24) qui sont appliqués directement au support (3),
      où le premier code QR (1) comporte n x m champs (11, 12, 13, 14) qui sont appliqués en chevauchement sur les champs (21, 22, 23, 24) du second code QR (2),
      où n ≥ 1 et m ≥ 2,

      d'où parmi les champs (11, 12, 13, 14) du premier QR code (1) et les champs (21, 22, 23, 24) du second QR code (2) pile (S1, S2, S3, S4 ) peut être formé selon une direction +Z,
      perpendiculaire au plan XY dans le système de coordonnées cartésiennes,
      **caractérisé en ce que**
      les champs (11, 12, 13, 14 ; 21, 22, 23, 24) du premier code QR (1) et du second code QR (2) sont des champs transparents colorés qui présentent au moins deux couleurs différentes,
      où le support (3) est un réflecteur avec une surface réfléchissante,
      la surface réfléchissante du réflecteur faisant face au second code QR (2).

3. Code 3D (100) selon la revendication 1 ou 2, où une couche protectrice (4) entoure le code 3D (100).

4. Procédé de fabrication d'un code 3D (100) selon la revendication 1 ou 2, comprenant les étapes suivantes:

fournir un programme informatique basé sur un algorithme qui contrôle la séquence des étapes de fabrication en fonction d'informations prédéfinies stockées dans une base de données,
où se trouvent les informations:
le numéro de série des codes 3D,
la personnalisation des codes 3D pour garantir l'unicité de chaque code 3D,
le nombre de codes 3D à réaliser,
le nombre de QR codes, le nombre de lignes et de colonnes de QR codes implémentés dans un code 3D,
le nombre de couleurs pour les champs colorés des QR codes, qui sont au moins deux couleurs différentes,
l'épaisseur des champs colorés, identiques ou différents pour tous les QR codes,
la taille et la forme des champs colorés,
si le support peut être conçu comme un réflecteur ou un substrat translucide et l'épaisseur du substrat,
si les champs colorés des QR codes sont appliqués à l'aide d'une imprimante numérique ou d'une imprimante 3D,
fournir une imprimante numérique ou d'une imprimante 3D;
fournir un support plan (3) dont la surface est orientée parallèlement au plan XY dans un système de coordonnées cartésiennes,
appliquer n x m champs transparents colorés (21, 22, 23, 24) sur le support (3) afin de former un second code QR (2),
appliquer n x m autres champs transparents colorés (11, 12, 13, 14) aux champs (21, 22, 23, 24) afin de former un premier code QR (1),
où les champs (11, 12, 13, 14) du premier code QR (1) et les champs (21, 22, 23, 24) du second code QR (2) forment des piles (S1, S2, S3, S4) dans une direction +Z,
où selon les informations de la base de données $n \geq 1$ et $m \geq 2$,
où le support (3) est un substrat transparent, incolore ou transparent, coloré, ou
où le support (3) est un réflecteur avec une surface réfléchissante, et
la surface réfléchissante du réflecteur faisant face au second code QR (2).

5. Procédé de production d'un code 3D (100) selon la revendication 4, où l'application des n x m champs transparents colorés (11, 12, 13, 14 ; 21, 22, 23, 24) est réalisée à l'aide de l'imprimante numérique,
l'imprimante numérique étant une imprimante couleur à jet d'encre ou une imprimante couleur laser.

6. Procédé de production d'un code 3D (100) selon la revendication 4, où l'application des n x m champs transparents colorés (11, 12, 13, 14 ; 21, 22, 23, 24) est réalisée à l'aide de l'imprimante 3D,
où l'imprimante 3D est une imprimante 3D en plastique.

7. Procédé de réalisation d'un code 3D (100) selon l'une des revendications 4 à 6, comprenant l'étape suivante:
appliquer une couche de protection (4) sur le code 3D (100).

8. Procédé de numérisation d'un code 3D selon l'une des revendications précédentes, comprenant les étapes suivantes:

fournir un programme informatique basé sur un algorithme qui contrôle la séquence du processus de numérisation en fonction d'informations prédéfinies stockées dans une base de données et valide le résultat de la numérisation,
où se trouvent les informations:
numéro de série des codes 3D,
propriétés optiques de toutes les combinaisons de couleurs possibles apparaissant dans une pile (S1, S2, S3, S4) des codes QR pour les couleurs spécifiées pour les champs colorés des codes QR,
ce sont la longueur d'onde de la combinaison de couleurs respective des couleurs spécifiées ou/et de la valeur chromatique de la couleur résultante de la combinaison de couleurs respective,
intensité de la lumière transmise à travers les champs colorés en fonction d'une intensité lumineuse initiale prédéfinie du faisceau lumineux et de la couleur de la lumière,
propriétés optiques de toutes les combinaisons de couleurs possibles apparaissant dans la pile (S1, S2, S3, S4) de codes QR pour les couleurs spécifiées pour les champs colorés des codes QR, en fonction de la variation de l'intensité lumineuse initiale ainsi que de la couleur de la lumière émise par le faisceau de lumière de la source lumineuse,
fournir un code 3D (100) selon la revendication 1;
fournir un scanner (200) pour scanner le code 3D (100) ;

où le scanner est conçu pour mesurer l'intensité lumineuse et/ou mesurer la longueur d'onde lumineuse et/ou détecter les valeurs de couleur,
fournir une source lumineuse (L) avec l'intensité lumineuse initiale prédéfinie;

où la source lumineuse (L) est positionnée devant le code 3D (100) de telle sorte que la source lumineuse (L) puisse envoyer un faisceau lumineux avec l'intensité lumineuse initiale prédéfinie dans la direction L1, perpendiculaire au premier QR code (1), et ainsi le faisceau lumineux traverse la pile (S1, S2, S3, S4), où le faisceau lumineux traversant l'empilement (S1, S2, S3, S4) a une intensité lumineuse affaiblie, où le code 3D (100) est positionné entre la source lumineuse (L) et le scanner (200), où le scanner (200) fait face au support (3) du code 3D (100) pour recevoir le faisceau lumineux avec l'intensité lumineuse atténuée provenant de la direction L2 et l'évaluer,

pour l'évaluation, le scanner (200) compare l'intensité de la base de données avec l'intensité lumineuse reçue pendant le balayage et, s'il y a une correspondance, vérifie l'authenticité du code 3D (100), sinon déclare le code 3D (100) comme invalide , et/ou pour l'évaluation, le scanner (200) compare la longueur d'onde de la lumière issue de la base de données avec la longueur d'onde de la lumière reçue lors du balayage et, s'il y a une correspondance, vérifie l'authenticité du code 3D (100), sinon le code 3D (100), déclaré invalide, et/ou
pour l'évaluation, le scanner (200) compare les valeurs de couleur de la lumière provenant de la base de données avec les valeurs de couleur de la lumière reçue lors du balayage et, s'il y a une correspondance, vérifie l'authenticité du code 3D (100), sinon le code 3D (100) est déclaré invalide.

9. Procédé de scannage d'un code 3D (100) selon la revendication 2, comprenant les étapes suivantes:

fournir un programme informatique basé sur un algorithme qui contrôle la séquence du processus de numérisation en fonction d'informations prédéfinies stockées dans une base de données et valide le résultat de la numérisation,
où se trouvent les informations:
numéro de série des codes 3D,
propriétés optiques de toutes les combinaisons de couleurs possibles apparaissant dans une pile (S1, S2, S3, S4) des codes QR pour les couleurs spécifiées pour les champs colorés des codes QR,
ce sont la longueur d'onde de la combinaison de couleurs respective des couleurs spécifiées ou/et de la valeur chromatique de la couleur résultante de la combinaison de couleurs respective,
intensité de la lumière transmise à travers les champs colorés en fonction d'une intensité lumineuse initiale prédéfinie du faisceau lumineux et de la couleur de la lumière,
propriétés optiques de toutes les combinaisons de couleurs possibles apparaissant dans la pile (S1, S2, S3, S4) de codes QR pour les couleurs spécifiées pour les champs colorés des codes QR, en fonction de la variation de l'intensité lumineuse initiale ainsi que de la couleur de la lumière émise par le faisceau de lumière de la source lumineuse,
fournir un code 3D (100) selon la revendication 2;
fournir un scanner (200) pour scanner le code 3D (100);
où le scanner est conçu pour mesurer l'intensité lumineuse et/ou mesurer la longueur d'onde lumineuse et/ou détecter les valeurs de couleur,
fournir une source lumineuse (L) avec l'intensité lumineuse initiale prédéfinie;

où le faisceau lumineux traverse l'empilement (S1, S2, S3, S4), où le faisceau lumineux traversant l'empilement (S1, S2, S3, S4) a une intensité lumineuse affaiblie, où la source lumineuse (L) est positionnée devant le code 3D (100) de telle sorte que la source lumineuse (L) puisse envoyer le faisceau lumineux avec l'intensité lumineuse initiale prédéfinie dans la direction L1, perpendiculaire au premier QR code (1), où le faisceau lumineux est réfléchi dans la direction L2 au niveau du réflecteur du support (3), où le scanner (200) fait face au code QR (1) et est positionné à côté de la source lumineuse (L) pour recevoir le faisceau lumineux avec l'intensité lumineuse atténuée et l'évaluer,

pour l'évaluation, le scanner (200) compare l'intensité de la base de données avec l'intensité lumineuse reçue pendant le balayage et, s'il y a une correspondance, vérifie l'authenticité du code 3D (100), sinon déclare le code 3D (100) comme invalide , et/ou pour l'évaluation, le scanner (200) compare la longueur d'onde de la lumière issue de la base de données avec la longueur d'onde de la lumière reçue lors du balayage et, s'il y a une correspondance, vérifie l'authenticité du code 3D (100), sinon le code 3D ( 100), déclaré invalide, et/ou

pour l'évaluation, le scanner (200) compare les valeurs de couleur de la lumière provenant de la base de données avec les propriétés de couleur de la lumière reçue lors du balayage et, en cas de correspondance, vérifie l'authenticité du code 3D (100), sinon le code 3D (100) est déclaré invalide.

10. Système de scannage d'un code 3D (100) selon l'une des revendications précédentes, comprenant:

un programme informatique basé sur un algorithme où l'ordre du processus de numérisation peut être contrôlé sur la base d'informations prédéfinies stockées dans une base de données et
le résultat de la numérisation peut être validé,
où se trouvent les informations:
numéro de série des codes 3D,
propriétés optiques de toutes les combinaisons de couleurs possibles apparaissant dans une pile de codes QR pour les couleurs spécifiées pour les champs colorés des codes QR,
il s'agit de la longueur d'onde de la combinaison de couleurs respective des couleurs spécifiées ou/et de la valeur chromatique de la couleur résultante de la combinaison de couleurs respective,
où le système comprend en outre:
un scanner (200) pour scanner le code 3D (100),
une source lumineuse (L) avec une intensité lumineuse initiale prédéfinie,

où la couleur de la lumière et/ou l'intensité lumineuse initiale de la source lumineuse (L) sont variables,
où la source de lumière (L) est positionnée devant le code 3D (100) de telle sorte que la source de lumière (L) puisse envoyer un faisceau lumineux avec une intensité lumineuse initiale prédéfinie dans la direction L1, perpendiculaire au premier code QR (1 ), et ainsi le faisceau lumineux traverse l'empilement (S1, S2, S3, S4),
où le faisceau lumineux traversant l'empilement (S1, S2, S3, S4) a une intensité lumineuse affaiblie,
où le code 3D (100) est positionné entre la source lumineuse (L) et le scanner (200),

le scanner (200) faisant face au support (3) du code 3D (100) et le faisceau lumineux avec l'intensité lumineuse affaiblie peut être reçu par le scanner (200) pour évaluer les propriétés optiques du faisceau lumineux.

11. Système de scannage d'un code 3D (100) selon la revendication 2, comprenant:

un programme informatique basé sur un algorithme où l'ordre du processus de numérisation peut être contrôlé sur la base d'informations prédéfinies stockées dans une base de données et
le résultat de la numérisation peut être validé,
où se trouvent les informations:
numéro de série des codes 3D,
propriétés optiques de toutes les combinaisons de couleurs possibles apparaissant dans une pile de codes QR pour les couleurs spécifiées pour les champs colorés des codes QR,
il s'agit de la longueur d'onde de la combinaison de couleurs respective des couleurs spécifiées ou/et de la valeur chromatique de la couleur résultante de la combinaison de couleurs respective,
où le système comprend en outre:
un scanner (200) pour scanner le code 3D (100), avec une source lumineuse (L) d'intensité lumineuse initiale prédéfinie,

où la couleur de la lumière et/ou l'intensité lumineuse initiale prédéfinie de la source lumineuse (L) sont variables,
où la source de lumière (L) est positionnée devant le code 3D (100) de telle sorte que la source de lumière (L) puisse envoyer un faisceau lumineux avec une intensité lumineuse initiale prédéfinie dans la direction L1, perpendiculaire au premier code QR (1 ), et ainsi le faisceau lumineux traverse l'empilement (S1, S2, S3, S4),
où le faisceau lumineux traversant l'empilement (S1, S2, S3, S4) a une intensité lumineuse affaiblie,
où le code 3D (100) est positionné entre la source lumineuse (L) et le scanner (200),

le faisceau lumineux pouvant être réfléchi sur le réflecteur en direction de L2,
où le scanner (200) fait face au code QR (1) et est positionné à côté de la source de lumière (L) et
le faisceau lumineux rétro-réfléchi avec l'intensité lumineuse affaiblie pouvant être reçu par le scanner (200) pour évaluer les propriétés optiques du faisceau lumineux.

Fig. 1a

Fig. 1b

Fig. 2a

Fig. 2b

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20180129174 A
- WO 2019214291 A1
- WO 0124106 A1
- WO 2021001767 A1